(19) Europäisches Patentamt
European Patent Office
Office européen des brevets

(11) **EP 4 561 146 A1**

(12) **EUROPEAN PATENT APPLICATION**
published in accordance with Art. 153(4) EPC

(43) Date of publication:
**28.05.2025 Bulletin 2025/22**

(21) Application number: **23842147.3**

(22) Date of filing: **10.07.2023**

(51) International Patent Classification (IPC):
*H04W 24/02* (2009.01)

(52) Cooperative Patent Classification (CPC):
**H04W 24/02; H04W 72/0446; H04W 72/11;
H04W 72/232**

(86) International application number:
**PCT/CN2023/106521**

(87) International publication number:
**WO 2024/017082 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022 CN 202210861763**

(71) Applicant: **Datang Mobile Communications
Equipment Co., Ltd.
Beijing 100085 (CN)**

(72) Inventor: **WANG, Junwei
Beijing 100085 (CN)**

(74) Representative: **Cabinet Nony
11 rue Saint-Georges
75009 Paris (FR)**

(54) **CONFIGURATION INFORMATION INDICATION METHOD AND DEVICE**

(57) Embodiments of the present disclosure relate to the technical field of communications, and provide a configuration information indication method and device. The method comprises: generating first signaling, wherein the first signaling is used for indicating a first configuration corresponding to a first time period, and the first configuration is used for indicating: time period information of one or more second time periods included in the first time period and configuration information corresponding to each second time period in the one or more second time periods; and sending the first signaling.

Generating first signaling, where the first signaling is used to indicate a first configuration corresponding to a first time segment, the first configuration is used to indicate time segment information of one or more second time segments within the first time segment, and configuration information respectively corresponding to each second time segment among the one or more second time segments — 500

↓

Transmitting the first signaling — 510

FIG. 5

**EP 4 561 146 A1**

**Description**

CROSS-REFERENCES TO RELATED APPLICATIONS

The present application claims priority to Chinese patent application No. 202210861763.X filed on July 20, 2022, entitled "Configuration Information Indication Method and Device", which is hereby incorporated by reference in its entirety.

FIELD

The present application relates to the field of communications, and in particular, to methods and apparatuses for configuration information indication.

BACKGROUND

In the related art, a dynamic beam indication is supported, and beam indication information is transmitted in data scheduling signaling, that is, scheduling signaling contains both data scheduling information (such as: data transmission time, modulation format) and beam indication information.

In the related art, a network controlled repeater (NCR) is required to detect scheduling information of all terminals. When a large quantity of user equipment (UEs) (such as terminals) exist in an area overridden by the NCR, the NCR needs to have a strong physical downlink control channel (PDCCH) detection capability, which has a high capability requirement on the NCR, and is not conducive to deployment for a network.

BRIEF SUMMARY

Embodiments of the present application provides methods and apparatuses for configuration information indication, which is used to solve a defect in the related art that a capability requirement of a network controlled repeater (NCR) is high and is not conducive to deployment of a network, and is used to reduce the capability requirement of the NCR and facilitate network deployment.

An embodiment of the present application provides a method for configuration information indication, performed by a base station, including: generating first signaling, where the first signaling is used to indicate a first configuration corresponding to a first time segment, the first configuration is used to indicate time segment information of one or more second time segments within the first time segment, and configuration information respectively corresponding to each second time segment among the one or more second time segments; and transmitting the first signaling.

Optionally, according to the method for configuration information indication of an embodiment of the present application, the configuration information includes beam information.

Optionally, according to the method for configuration information indication of an embodiment of the present application, the first signaling includes a first index corresponding to the first time segment, the first index is used to indicate a first configuration corresponding to the first index in a time domain resource allocation (TDRA) table, where the first index is one of one or more indexes included in the TDRA table, each index in the TDRA table corresponds to a type of configuration, and different indexes correspond to different configurations.

Optionally, according to the method for configuration information indication of an embodiment of the present application, in case that the first signaling is used to indicate first configurations respectively corresponding to multiple first time segments, first indexes respectively corresponding to each first time segment among the multiple first time segments are partially the same, completely the same, or completely different.

Optionally, according to the method for configuration information indication of an embodiment of the present application, the first signaling includes first information and/or second information, where: the first information is used to indicate one or more second time segment information; and the second information is used to indicate configuration information respectively corresponding to the one or more second time segments.

Optionally, according to the method for configuration information indication of an embodiment of the present application, the first signaling includes one or more pieces of first information, and the first information and the second time segments are in a one-to-one correspondence.

Optionally, according to the method for configuration information indication of an embodiment of the present application, the first signaling includes one or more pieces of second information, and the second information and the second time segments are in a one-to-one correspondence.

Optionally, according to the method for configuration information indication of an embodiment of the present application, the length of the first signaling is: M*segment_time_bits + M*beam_bits, where

$$\text{segment\_time\_bits} = \lceil \log_2 \ (W * (W + 1)/2) \rceil$$ , M is a quantity of the one or more second time segments, W is a length of the first time segment, and beam_bits is a length of configuration information corresponding to one second time segment.

Optionally, according to the method for configuration information indication of an embodiment of the present application, the first information includes: third information, where the third information includes at least one of the following:

first location information of an intermediate time unit in the first time segment, where the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or

second location information of an intermediate time segment in the first time segment, where the second location information is used to divide the first time segment into one or more second time segments, the intermediate time segment determined by the second location information is used as the second time segment, and a quantity of the intermediate time segments is one or more.

Optionally, according to the method for configuration information indication of an embodiment of the present application, the second location information includes at least one of the following: a start location of the intermediate time segment; an end location of the intermediate time segment; or a length of the intermediate time segment.

Optionally, according to the method for configuration information indication of an embodiment of the present application, the length of the first signaling is: segment_time_bits + M*beam_bits, where segment_time_bits = $F$(W, M), F() is an operation function, the operation function is associated with a length W of the first time segment and a quantity M of the one or more second time segments, the second time segment is located in the first time segment, and beam_bits is a length of configuration information corresponding to one second time segment.

Optionally, the second information includes an identifier of a first configuration information combination; the first configuration information combination is used to indicate the configuration information respectively corresponding to the one or more second time segments respectively, the first configuration information combination is a partial configuration information combination among one or more second configuration information combinations, and identifiers of the one or more second configuration information combinations are known to the base station and a terminal.

Optionally, according to the method for configuration information indication of an embodiment of the present application, an encoding way of the first information and the second information in the first signaling includes: a start and length indicator value (SLIV) encoding way, or a first encoding way, where the first encoding way is a preset or protocol predefined encoding way.

Optionally, according to the method for configuration information indication of an embodiment of the present application, the method further includes: determining effective time of the first configuration; and transmitting fourth information to a terminal, where the fourth information is used to indicate the effective time of the first configuration, where the fourth information is included in the first signaling, or the fourth information is carried in other signaling, or the fourth information is separate signaling.

Optionally, according to the method for configuration information indication of an embodiment of the present application, determining the effective time of the first configuration includes: obtaining capability information of a network controlled repeater (NCR), and determining the effective time based on the capability information, where the capability information is used to indicate minimum effective time supported by the NCR.

Optionally, according to the method for configuration information indication of an embodiment of the present application, the time segment information includes at least two of the following: a start location, an end location, or a length, where the encoding way of at least two of the start location, the end location, or the length in the first signaling includes: a start and length indicator value (SLIV) encoding way, or a second encoding way, where the second encoding way is a preset or protocol predefined encoding way.

Optionally, the first configuration is used to indicate time segment information of one or more second time segments within the first time segment, and the configuration information respectively corresponding to each second time segment among the one or more second time segments, includes: the first configuration is used to, in case that an overlapping time unit exists between a third time segment and the one or more second time segments, indicate time units included in the one or more second time segments to skip the overlapping time unit, or, indicate configuration information corresponding to the overlapping time unit based on a priority of configuration information corresponding to the third time segment and a priority of configuration information corresponding to the one or more second time segments, where the configuration information of the third time segment is configured by a semi-static configuration way.

An embodiment of the present application further provides a method for configuration information indication, performed by a terminal, including: receiving first signaling; obtaining a first configuration corresponding to a first time segment based on the first signaling; and determining, based on the first configuration, time segment information of one or more second time segments included in the first time segment, and configuration information respectively corresponding to each second time segment among the one or more second time segments.

Optionally, according to the method for configuration information indication of an embodiment of the present application, the configuration information includes beam information.

Optionally, according to the method for configuration information indication of an embodiment of the present application, the first signaling includes a first index corresponding to the first time segment, the first index is used to indicate a first configuration corresponding to the first index in a time domain resource allocation (TDRA) table, where the first index is one of one or more indexes included in the TDRA table, each index in the TDRA table corresponds to a type of configuration, and different indexes correspond to different configurations.

Optionally, according to the method for configuration information indication of an embodiment of the present application, in case that the first signaling is used to indicate first configurations respectively corresponding to multiple first time segments, first indexes respectively corresponding to each first time segment among the multiple first time segments are partially the same, completely the same, or completely different.

Optionally, according to the method for configuration information indication of an embodiment of the present application, the first signaling includes first information and/or second information, where: the first information is used to indicate one or more second time segment information; and the second information is used to indicate configuration information respectively corresponding to the one or more second time segments.

Optionally, according to the method for configuration information indication of an embodiment of the present application, the first signaling includes one or more pieces of first information, and the first information and the second time segments are in a one-to-one correspondence.

Optionally, according to the method for configuration information indication of an embodiment of the present application, the first signaling includes one or more pieces of second information, and the second information and the second time segments are in a one-to-one correspondence.

Optionally, according to the method for configuration information indication of an embodiment of the present application, the length of the first signaling is: M*segment_time_bits + M*beam_bits, where

$$\text{segment\_time\_bits} = \lceil \log_2 \left( W * (W + 1)/2 \right) \rceil$$, M is a quantity of the one or more second time segments, W is a length of the first time segment, and beam_bits is a length of configuration information corresponding to one second time segment.

Optionally, according to the method for configuration information indication of an embodiment of the present application, the first information includes: third information, where the third information includes at least one of the following:

first location information of an intermediate time unit in the first time segment, where the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or

second location information of an intermediate time segment in the first time segment, where the second location information is used to divide the first time segment into one or more second time segments, the intermediate time segment determined by the second location information is used as the second time segment, and a quantity of the intermediate time segments is one or more.

Optionally, according to the method for configuration information indication of an embodiment of the present application, the second location information includes at least one of the following: a start location of the intermediate time segment; an end location of the intermediate time segment; or a length of the intermediate time segment.

Optionally, according to the method for configuration information indication of an embodiment of the present application, the length of the first signaling is: segment_time_bits + M*beam_bits, where segment_time_bits = $F$(W, M), F() is an operation function, the operation function is associated with a length W of the first time segment and a quantity M of the one or more second time segments, the second time segment is located in the first time segment, and beam_bits is a length of configuration information corresponding to one second time segment.

Optionally, according to the method for configuration information indication of an embodiment of the present application, determining, based on the first configuration, time segment information of one or more second time segments included in the first time segment, and configuration information respectively corresponding to each second time segment among the one or more second time segments includes: in case that an overlapping time unit exists between a third time segment and the one or more second time segments, determining that time units included in the one or more second time segments skip the overlapping time unit, or, determining configuration information corresponding to the overlapping time unit based on a priority of configuration information corresponding to the third time segment and a priority of configuration information corresponding to the one or more second time segments, where the configuration information of the third time segment is configured by a semi-static configuration manner.

Optionally, determining configuration information corresponding to the overlapping time unit based on a priority of configuration information corresponding to the third time segment and a priority of configuration information corresponding to the one or more second time segments includes: in case that the priority of the configuration information corresponding to the third time segment is higher than the priority of the configuration information corresponding to the one or more second time segments, determining the configuration information corresponding to the overlapping time unit based on the configuration information corresponding to the third time segment; or in case that the priority of the configuration information corresponding to the third time segment is lower than the priority of the configuration information corresponding to the one or more second time segments, determining the configuration information corresponding to the overlapping time unit based on the configuration information corresponding to the one or more second time segments.

Optionally, the method further includes: receiving fourth information, where the fourth information is used to indicate effective time of the first configuration, where the fourth information is included in the first signaling, or the fourth information is carried in other signaling, or the fourth information is separate signaling.

An embodiment of the present application further provides a base station, including a memory, a transceiver and a processor, where the memory is used for storing a computer program, the transceiver is used for receiving and transmitting data under control of the processor, and the processor is used for reading the computer program in the memory and perform steps of the method for configuration information indication described above.

An embodiment of the present application further provides a terminal, including a memory, a transceiver and a processor, where the memory is used for storing a computer program, the transceiver is used for receiving and transmitting data under control of the processor, and the processor is used for reading the computer program in the memory and perform steps of the method for configuration information indication described above.

An embodiment of the present application further provides an apparatus for configuration information indication, including: a generating module, used for generating first signaling, where the first signaling is used to indicate a first configuration corresponding to a first time segment, the first configuration is used to indicate time segment information of one or more second time segments within the first time segment, and configuration information respectively corresponding to each second time segment among the one or more second time segments; and a transmitting module, used for transmitting the first signaling.

An embodiment of the present application further provides an apparatus for configuration information indication, including: a generating module, used for generating first signaling, where the first signaling is used to indicate a first configuration corresponding to a first time segment, the first configuration is used to indicate time segment information of one or more second time segments within the first time segment, and configuration information respectively corresponding to each second time segment among the one or more second time segments; and a transmitting module, used for transmitting the first signaling.

An embodiment of the present application further provides a processor-readable storage medium, where the processor-readable storage medium stores a computer program, the computer program is used for causing a processor to perform steps of the method for configuration information indication described above.

In the methods and apparatuses for configuration information indication provided by the embodiment of the present application, by dividing the first time segment into multiple time segments, configuring a beam direction for each second time segment, and indicating the first signaling to an NCR mobile termination the time segment information of one or more second time segments included in the first time segment, and the configuration information respectively corresponding to each second time segment among the one or more second time segments is indicated to the terminal. Dynamic and flexible time segment indication is adopted for the first time segment, which avoids the NCR to detect scheduling information of all terminals, reduces capability requirements for the NCR, and facilitates network deployment.

BRIEF DESCRIPTION OF THE DRAWINGS

In order to illustrate the solutions in the embodiments of the present application or in the related art more clearly, the drawings used in the description of the embodiments or the related art are briefly described below. The drawings in the following description are only some embodiments of the present application, and other drawings may be obtained according to these drawings without any creative work for those skilled in the art.

FIG. 1 is a topology schematic diagram of a network controlled repeater (NCR) in a network according to an embodiment of the present application;

FIG. 2 is a schematic diagram of L1 signaling indicating a beam of a forwarding link of an NCR according to an embodiment of the present application;

FIG. 3 is a schematic diagram of indications of physical downlink shared channel (PDSCH) time domain information and beam information according to an embodiment of the present application;

FIG. 4 is a schematic diagram of an NCR parsing scheduling signaling transmitted to a terminal according to an embodiment of the present application;

FIG. 5 is a first schematic flowchart of a method for configuration information indication according to an embodiment of the present application;

FIG. 6 is a first schematic diagram of a first configuration according to an embodiment of the present application;

FIG. 7 is a second schematic diagram of a first configuration according to an embodiment of the present application;

FIG. 8 is a first schematic diagram of an indication of a first configuration according to an embodiment of the present application;

FIG. 9 is a second schematic diagram of an indication of a first configuration according to an embodiment of the present application;

FIG. 10 is a third schematic diagram of an indication of a first configuration according to an embodiment of the present application;

FIG. 11 is a fourth schematic diagram of an indication of a first configuration according to an embodiment of the present application;

FIG. 12 is a second schematic flowchart of a method for configuration information indication according to an embodiment of the present application;

FIG. 13 is a third schematic diagram of a first configuration according to an embodiment of the present application;

FIG. 14 is a fourth schematic diagram of a first configuration according to an embodiment of the present application;

FIG. 15 is a schematic structural diagram of a base station according to an embodiment of the present application;

FIG. 16 is a schematic structural diagram of a terminal according to an embodiment of the present application;

FIG. 17 is a first schematic structural diagram of an apparatus for configuration information indication according to an embodiment of the present application; and

FIG. 18 is a second schematic structural diagram of an apparatus for configuration information indication according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship. In the embodiments of the present application, the term "multiple" refers to two or more, and other quantifiers are similar. The terms "first", "second", etc. in the description and claims of the present application are used to distinguish similar objects, and are not used to describe a specific order or limit other content.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

Embodiments of the present application provide methods and apparatuses for configuration information indication, which are used to reduce a capability requirement of a network controlled repeater (NCR), thereby facilitating network deployment. The methods and apparatuses are based on the same application concept. Since the methods and apparatuses solve problems in a similar manner, implementation of the apparatuses and the methods can refer to each other, and repeated parts is not repeated.

The solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

First, the following contents are introduced.

(1) A network controlled repeater (NCR). An intelligent behavior of the repeater refers to that the repeater can make a real-time adjustment during transmission or reception procedures based on an actual need of a service terminal. Generally, in order to support a real-time adjustment procedure of a smart repeater (SR), a base station needs to transmit assistance information or control information to the repeater, so SR is also called NCR.

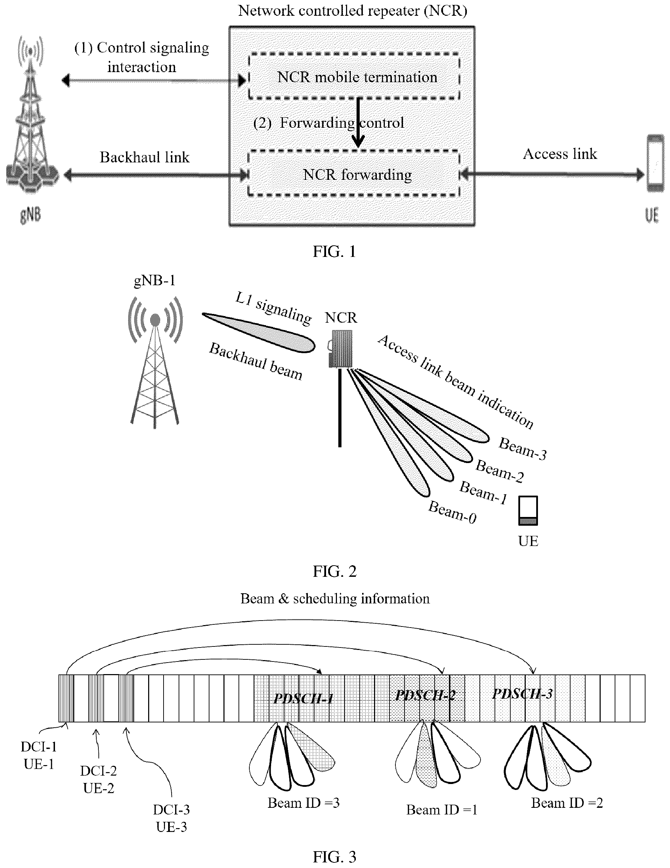

FIG. 1 is a topology schematic diagram of an NCR in a network according to an embodiment of the present application. As shown in FIG. 1, the NCR includes two functional modes: an NCR mobile termination (function) and a NCR forwarding (function). NCR mobile termination is used to interact control signaling with the base station, and the control signaling is used to control parameters for the NCR forwarding, such as controlling a beam direction of an access link. NCR forwarding is used to forward signals from the base station to the terminal, and forward signals from the terminal to the base station. Relevant forwarding parameters are transmitted by the NCR mobile termination.

(2) A beam indication in an access link. FIG. 2 is a schematic diagram of L1 signaling indicating a beam of a forwarding link of an NCR according to an embodiment of the present application. As shown in FIG. 2, a beam between a base station (gNB) and the NCR is relatively stable. An access link between the NCR and a user equipment (UE) may be overridden by multiple beams. As the terminal moves or environment changes, a beam direction from the NCR to the terminal needs to be adjusted. The beam is indicated by the gNB, that is, the gNB indicates the beam used by the NCR when forwarding a signal through the control signaling. For example, the base station transmits the L1 signaling to the NCR, and the L1 signaling indicates beam information of the access link. Therefore, the gNB needs to effectively indicate the beam information transmitted between the NCR and the UE, and dynamically indicate the beam information to adapt to environmental changes or terminal mobility.

(3) Dynamically indicate a beam of a physical downlink shared channel (PDSCH). FIG. 3 is a schematic diagram of indications of PDSCH time domain information and beam information according to an embodiment of the present application. As shown in FIG. 3, in a communication system, dynamic beam indication is supported, and beam indication information is transmitted in data scheduling and scheduling signaling, that is, a scheduling signaling includes data scheduling information (such as: data transmission time, modulation format) and the beam indication information.

On a base station side: downlink control information (DCI), that is, DCI-1 (a target terminal is a UE-1), is transmitted. The scheduling information includes the time domain information and beam information of a PDSCH-1 (beam ID=3). DCI-2 (target terminal is a UE-2) is transmitted. The scheduling information includes the time domain information and beam information of a PDSCH-2 (beam ID=1). DCI-3 (target terminal is a UE-3) is transmitted. The scheduling information includes the time domain information and beam information of a PDSCH-3 (beam ID=2).

On a terminal side: the UE-1 receives the DCI-1. From information carried in the scheduling signaling, the terminal can know: a symbol location occupied by the PDSCH-1 and a corresponding beam direction. The terminal uses related beam parameters of the beam ID=3 to receive the PDSCH-1 based on the beam indication. The UE-2 receives the DCI-2. From the information carried in the scheduling signaling, the terminal can know: a symbol location occupied by the PDSCH-2 and a corresponding beam direction. The terminal uses related beam parameters of beam ID=1 to receive the PDSCH-2 based on the beam indication. The UE-3 receives the DCI-3. From the information carried in the scheduling signaling, the terminal can know: a symbol location occupied by the PDSCH-3 and a corresponding beam direction. The terminal uses related beam parameters of beam ID=2 to receive the PDSCH-3 based on the beam indication.

(4) The NCR detects scheduling signaling of the service terminal. The NCR detects scheduling signaling of all service terminals, that is, the scheduling signaling transmitted from the NCR base station to the terminal, obtains beam information and duration information about application of the beam, and then the NCR determines beam direction parameters of a repeater forwarding link based on the scheduling signaling.

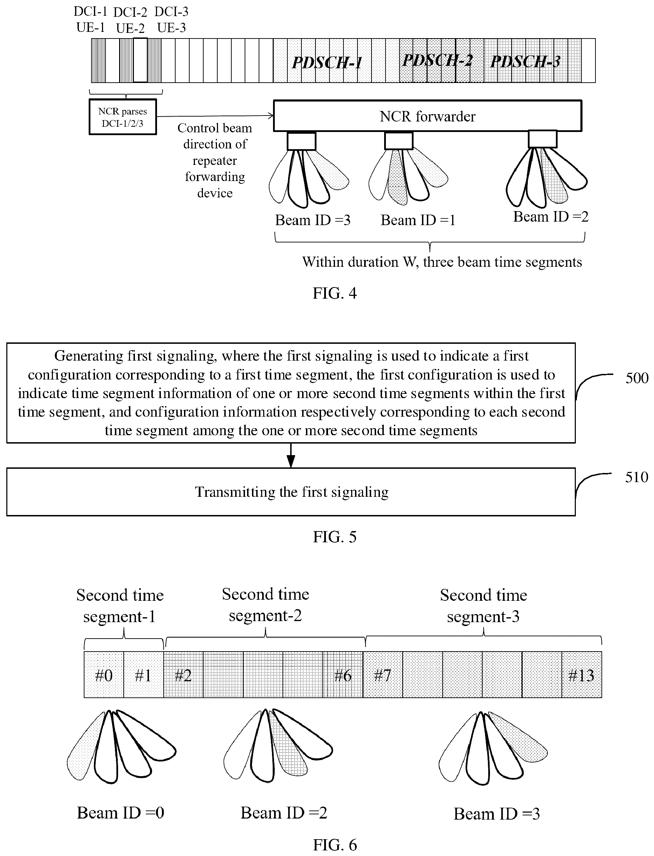

FIG. 4 is a schematic diagram of an NCR parsing scheduling signaling transmitted to a terminal according to an embodiment of the present application. As shown in FIG. 4, it is assumed that: the DCI-1 schedules a data PDSCH-1 of the UE-1. An identification identifier (ID) of the terminal is a cell radio network temporary identifier (C-RNTI), that is, a C-RNTI-1. The DCI-2 schedules a data PDSCH-2 of the UE-2. An identification ID of the terminal is a C-RNTI-2. The DCI-3 schedules a data PDSCH-3 of the UE-3. An identification ID of the terminal is a C-RNTI-3.

Then behaviors of the NCR are as follows. The NCR detects the DCI-1 based on the C-RNTI-1 and a PDCCH detection opportunity configured by a corresponding base station. The NCR detects the DCI-2 based on the C-RNTI-2 and a PDCCH detection opportunity configured by a corresponding base station. NCR detects DCI-3 based on the C-RNTI-3 and a PDCCH detection opportunity configured by a corresponding base station.

In case that corresponding DCI-1/DCI-2/DCI-3 is detected, PDSCH-1/PDSCH-2/PDSCH-3 and beam information are obtained, the NCR controls a beam direction of a repeater transmission device, and forwards a corresponding time domain signal based on the received beam indication and time domain information.

A traditional solution requires the NCR to detect scheduling information of all terminals. In case that many UE terminals exist in an area overridden by the NCR, the NCR needs a strong PDCCH detection capability, which will increase a cost of the NCR and is not conducive to the network deployment. In addition, the NCR needs to know a detection timing configuration and related configuration parameters of PDCCHs of all terminals, which will cause communication security risks.

A traditional solution requires the NCR to detect scheduling information of all terminals. In case that many UE terminals exist in an area overridden by the NCR, the NCR needs a strong PDCCH detection capability, which will increase a cost of the NCR and is not conducive to the network deployment. In addition, the NCR needs to know a detection timing configuration and related configuration parameters of PDCCHs of all terminals, which will cause communication security risks. Therefore, an embodiment of the present application provides methods and apparatuses for configuration information indication.

FIG. 5 is a first schematic flowchart of a method for configuration information indication according to an embodiment of the present application. As shown in FIG. 5, an embodiment of the application provides a method for configuration information indication, performed by a base station. The method includes the following steps. Step 500: generating first signaling, where the first signaling is used to indicate a first configuration corresponding to a first time segment, the first configuration is used to indicate time segment information of one or more second time segments within the first time segment, and configuration information respectively corresponding to each second time segment among the one or more second time segments. Step 510: transmitting the first signaling.

Optionally, an "agreed duration" (that is, a first time segment), may be divided into M second time segments, and first signaling is generated. The first signaling is transmitted to the NCR to indicate configuration information corresponding to each second time segment to the NCR.

Optionally, a quantity M of segments (a quantity of one or more second time segments), which is a parameter of the "agreed duration" (that is, the first time segment), may be configured by the base station. For example, the first time segment may be a slot of fourteen symbols. Optionally, time segment information of one or more second time segments included in the first time segment, and the configuration information respectively corresponding to each second time segment among the one or more second time segments, are dynamically indicated to the NCR through the first signaling.

Optionally, the base station transmits the first signaling to the NCR mobile termination (function). Optionally, in each embodiment of the present application, a receiver of the first signaling is the NCR mobile termination (function), which may be referred to as the terminal, and will not be repeated in the following.

It should be noted that the first signaling is used to indicate the configuration corresponding to one or more first time segments.

In the method for configuration information indication provided by the embodiment of the present application, by dividing the first time segment into multiple time segments, configuring a beam direction for each second time segment, and indicating the first signaling to the NCR mobile termination, the time segment information of one or more second time segments included in the first time segment, and the configuration information respectively corresponding to each second time segment among the one or more second time segments is indicated to the terminal. Dynamic and flexible time segment indication is adopted for the first time segment, which avoids the NCR to detect scheduling information of all terminals, reduces capability requirements for the NCR, and facilitates network deployment.

Optionally, the configuration information includes beam information.

Optionally, an "agreed duration" (that is, a first time segment), may be divided into M second time segments, and first signaling is generated. The first signaling is transmitted to the NCR to indicate beam information, such as a beam direction, corresponding to each second time segment to the NCR. Optionally, the time segment information of one or more second time segments included in the first time segment, and beam information respectively corresponding to each second time segment among the one or more second time segments, are dynamically indicated to the NCR through the first signaling.

Optionally, it may be considered that content indicated by the first signaling includes time segment information and the beam information respectively corresponding to each second time segment. Optionally, in order to support beamforming of a forwarding link to improve receiving performance of the terminal side, beamforming may be performed by two methods: a semi-static configuration and a dynamic indication. The embodiment of the present application can dynamically indicate beam information on the forwarding link close to the terminal side.

Optionally, the configuration information in each embodiment of the present application may be explained and illustrated by taking beam information as an example, but the configuration information is not limited to beam information, and may also be other resources, which is not limited here. It should be noted that the beam information in examples corresponding to the beam information in each embodiment of the present application may be directly replaced by the configuration information, or other resources that are also configuration information, which is not limited here.

Optionally, the first signaling includes a first index corresponding to the first time segment, the first index is used to indicate a first configuration corresponding to the first index in a time domain resource allocation (TDRA) table, where the first index is one of one or more indexes included in the TDRA table, each index in the TDRA table corresponds to a type of configuration, and different indexes correspond to different configurations.

Optionally, an indication method of the first configuration corresponding to the first time segment may include: a TDRA table method (time segmentation information and beam information list indicated by a high configuration), which may be implemented by indicating an index value (of the first index) through a physical layer or a medium access control (MAC) layer. Optionally, the base station may pre-configure the TDRA table. Optionally, the TDRA table may be indicated to the NCR mobile termination (function) after pre-configuration by the base station. Optionally, the TDRA table may be indicated to the terminal by the base station through a higher layer signaling. Optionally, the TDRA table may be pre-defined by the protocol. Optionally, the TDRA table may be pre-set. Optionally, the TDRA table may be jointly maintained by the base station and the NCR mobile termination (function). Optionally, the TDRA table may include multiple second indexes, each second index corresponding to one configuration. Optionally, each configuration is a segmentation information of a first time segment segmented into one or more second time segments, and configuration information corresponding to each second time segment. Optionally, each configuration is segmentation information of a first time segment segmented into one or more second time segments, and beam information respectively corresponding to each second time segment.

Optionally, the TDRA table may be as shown in Table 1.

Table 1

| Second index | Second time segment-1 | Second time segment-2 | Second time segment-3 | Note |
|---|---|---|---|---|
| 0 | S=0, L=2 beam ID=0 | S=2, L=5 beam ID=2 | S=7, L=7 beam ID=3 | Indicated by three time segments, where each second time segment is continuous. |
| 1 | S=0, L=2 beam ID=0 | S=2, L=12 beam ID=2 | | Indicated by two time segments, where each second time segment is continuous. |
| 2 | S=0, L=14 beam ID=3 | | | Indicated by one time segment, where each second time segment is continuous. |
| 4 | S=0, L=4 beam ID=1 | S=7, L=4 beam ID=2 | | Indicated by two time segments, where each second time segment is not continuous. |

It should be noted that in Table 1, S represents a start symbol of a beam indication segment, and L represents a length indication of the beam segment. In addition, the start symbol S and an end symbol E may also be used to represent the time segment information, where $E=S+L$. It should be noted that in case that the two segments are not continuous, that is, a symbol without indication is skipped, a beam direction of a corresponding symbol may be a default beam direction or a semi-statically configured direction. Accordingly, the beam ID represents a beam direction parameter of the beam. It should be noted that Table 1 is only an example of the TDRA table and is not a limitation to the TDRA table.

Optionally, the base station may indicate the index value of the first index to the terminal through the physical layer signaling or the MAC layer indication, and the terminal can determine the first configuration corresponding to the first index from the TDRA table based on an indication of the first index, and then determine the time segmentation information in the first time segment (one or more second time segments), and the beam information corresponding to each second time segment.

For example, FIG. 6 is a first schematic diagram of a first configuration according to an embodiment of the present application. As shown in FIG. 6, the base station may indicate the index value of the first index as 0 through the physical layer signaling, then the NCR mobile termination (function) transmits three beams in the first time segment indicated by the base station, and the corresponding second time segment and beam information may be:

time segment-1 uses beam ID=0, that is, symbol #0 and symbol #1 both use beam ID=0; and time segment-2 uses beam ID=2, that is, symbols #2/#3/#4/#5/#6 all use beam ID=2, and so on.

Optionally, in case that the first signaling is used to indicate first configurations respectively corresponding to multiple first time segments, first indexes respectively corresponding to each first time segment among the multiple first time segments are partially the same, completely the same, or completely different.

Optionally, the first configurations corresponding to multiple first time segments may be indicated simultaneously. Optionally, different first time segments can correspond to the same first configuration. Optionally, different first time segments can correspond to different first configurations.

In an embodiment, the base station can first configure the TDRA table, and then configure the TDRA table through the higher-layer signaling (or the protocol agreement). The table includes multiple row information (multiple second indexes) (which is also called multiple entry (entity) information), each row contains one or more actual segment information, specifically including:

each second time segment: start location (start), length (length) or end location (end); and the configuration information (the beam information) corresponding to each second time segment, such as beam direction, beam ID, etc., where the base station needs to indicate a duration of each row indication, which may be one slot (for example: fourteen symbols) or multiple slots.

Optionally, the TDRA table may be as shown in Table 2.

Table 2

| Second index | Second time segment-1 | Second time segment-2 | Second time segment-3 | Note |
|---|---|---|---|---|
| 0 | S=0, L=2 beam ID=0 | S=2, L=5 beam ID=2 | S=7, L=7 beam ID=3 | Indicated by three time segments, where each second time segment is continuous |
| 1 | S=0, L=7 beam ID=0 | S=7, L=7 beam ID=2 | | Indicated by two time segments, where each second time segment is continuous |
| 2 | S=0, L=14 beam ID=3 | | | Indicated by one time segment, where each second time segment is continuous |
| 4 | S=0, L=4 beam ID=1 | S=7, L=4 beam ID=2 | | Indicated by two time segments, where each second time segment is continuous |

A duration of each row indication is one slot (which may be called the agreed duration), S represents the start symbol of the beam indication segment, L represents the length indication of the beam segment; and beam ID represents the beam direction of the beam.

Specifically, the base station can configure the multi-time segment beam table through the following signaling:
beam-TimeDomainList ::=SEQUENCE (SIZE(1.. maxNroRow)) OF RowSegment-TimeDomain

//configure a multi-time beam indication table beam-TimeDomainList, where the table contains at most maxNroRow rows (such as maxNroRow=32 rows) of RowSegment-TimeDomain (configuration of each row of information);

RowSegment-TimeDomain ::= MultiSegment-Time-beam    SEQUENCE (SIZE(1..maxM)) OF PerMultiSegment-Time-beam}

//each row of time segment & beam information content RowSegment-TimeDomain, where each row contains at most maxM time segment information (such as: M=3) PerMultiSegment-Time-beam (beam information for each time segment)

PerMultiSegment-Time-beam::= SEQUENCE {

beamID        ENUMERATED {beam0,  beam1, beam2, beam3}, //Each segment of information contains a BEAM ID

startSymbolAndLength  INTEGER (0..127), //each segment of information contains a time point information (start symbol, and symbol length).

Configuration content of the startSymbolAndLength includes two values: the start symbol S, and the symbol length L. The calculation relationship method can refer to the related art and will not be repeated here.

It should be noted that: in the present embodiment, all methods indicating the time domain information of M=3 can use this calculation method.

Optionally, the base station may indicate the first index through the physical layer signaling to indicate the first configuration; and the terminal may determine the first configuration based on the first index. Optionally, when indicating multiple beam information of one agreed duration (first time segment) (time segment information and beam information respectively corresponding to each second time segment), $\lceil \log_2 (maxNroRow) \rceil$ bits are required.

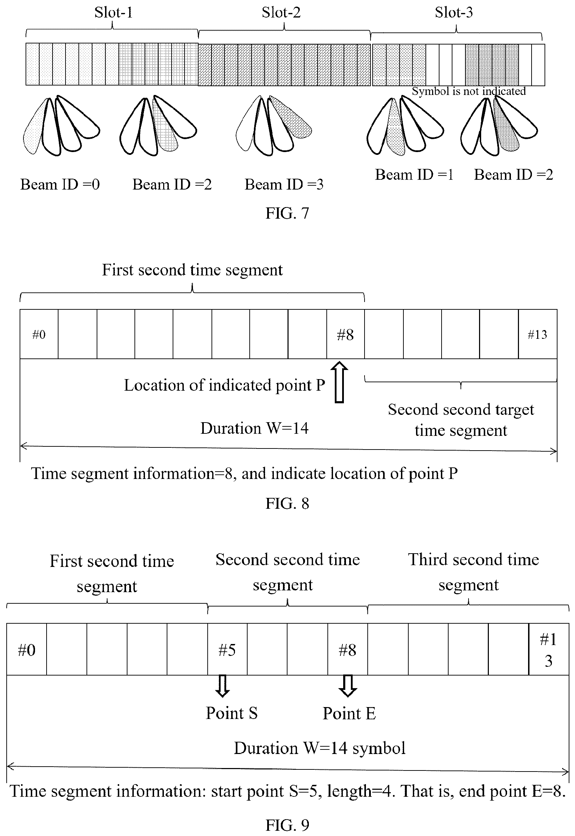

Optionally, FIG. 7 is a second schematic diagram of a first configuration according to an embodiment of the present application. As shown in FIG. 7, if the base station indicates beam information of three agreed durations (first time segments) W through the physical layer signaling, where the indicated index values are 1, 2 and 3, situations of the NCR may transmit beams and related time segments on three indicated slots are as follows.

The control signaling indicates beam information of three first time segments W (each first time segment has a duration of one slot, and contains fourteen symbols). It should be noted that in the beam indication, only part of symbols within the time segment W may be indicated, and some symbols within the time segment W are not indicated. For example, no beam information indication exists in symbols #4/#5/#6 in slot-3, and the NCR may perform transmission based on a default beam, or transmit no information, which is not limited in the embodiment of the present application.

Optionally, the first signaling includes first information and/or second information, where: the first information is used to indicate one or more second time segment information; and the second information is used to indicate configuration information respectively corresponding to the one or more second time segments.

Optionally, the indication method of the first configuration corresponding to the first time segment may include: directly and dynamically indicating the time segmentation information and beam information through the DCI or a medium access control-control element (MAC-CE), where the specific indication means may include: second time segment allocation indication, second time segment joint indication, time segment and beam information joint indication and other means.

Optionally, the time segment information and the beam information respectively corresponding to each second time segment may be directly transmitted in the physical layer signaling, which can make scheduling of the base station more flexible. Optionally, the time segment information may be indicated by the first information. Optionally, the configuration information respectively corresponding to each second time segment may be indicated by the second information. Optionally, the first information and the second information may be indicated together or simultaneously. Optionally, the first information and the second information may be indicated separately.

For example, the base station can configure the DCI to indicate the first time segment (the duration is W, such as fourteen symbols of a time slot, W=14), and indicate a maximum quantity M of segments (such as M=3), a quantity of bits (segment_time_bits) is used for indicating a duration of each second time segment, and a quantity of bits occupied by each beam ID is beam_bits (such as 2 bits). The base station can then indicate the first information and the second information "the time segment information and the beam information respectively corresponding to each second time segment" to the NCR through the physical layer signaling.

Optionally, the first signaling includes one or more pieces of first information, and the first information and the second time segments are in a one-to-one correspondence. Optionally, segmentation information of the first time segment, that is, an indication of the time segment information, may be indicated independently.

Optionally, the first signaling can include one or more pieces of first information, and one piece of second information, that is, indicating that the time segment information is independently indicated and the beam information is jointly indicated, where each first information correspondingly indicates one second time segment. Optionally, the second information may indicate one piece of beam information, characterizing that one or more second time segments indicated by one or more pieces of first information correspond to the same beam information. Optionally, the second information may indicate an identifier of a beam information combination, where the beam information combination is used to indicate the beam information respectively corresponding to one or more second time segments.

Optionally, the first signaling can include one or more pieces of first information, and one or more pieces of second information, that is, the time segment information is independently indicated, and the beam information is independently or jointly indicated, where each first information correspondingly indicates one second time segment. Optionally, the beam information is independently indicated, that is, the second information indicates one or more pieces of beam information, which is in a one-to-one correspondence with one or more second time segments respectively indicated by one or more pieces of first information. Optionally, the beam information is jointly indicated, where the second information may indicate multiple beam information, where at least one beam corresponds to multiple consecutive second time segments in one or more second time segments, that is, in case that the beam information corresponding to consecutive second time segments is the same, the consecutive second time segments may be indicated in the same beam information.

Optionally, the first signaling includes one or more pieces of second information, and the second information and the second time segments are in a one-to-one correspondence.

Optionally, the beam information may be indicated independently. That is, the first information and the second information may be indicated independently, each first information indicates one second time segment, and each second information indicates beam information corresponding to one second time segment.

Optionally, the first signaling may include one piece of first information, and one or more pieces of second information, that is, the time segment information is jointly indicated, and the beam information is independently indicated. For example, by indicating a location between multiple second time segments (such as an intermediate time segment unit or an intermediate time segment), the second time segment is jointly indicated. The second information indicates one or more pieces of beam information, which is respectively in a one-to-one correspondence with one or more pieces of beam information.

Optionally, the length of the first signaling is: M*segment_time_bits + M*beam_bits, where $segment\_time\_bits = \lceil \log_2 (W * (W + 1)/2) \rceil$, M is a quantity of the one or more second time segments, W is a length of the first time segment, and beam_bits is a length of configuration information corresponding to one second time segment.

For example, the first signaling may indicate: beam information of the first time segment length W, where each second time segment length can range from 1 to W, and a start location of each second time segment is any location within the duration W, indicating that a quantity of bits occupied by each time segment information is: $segment\_time\_bits = \lceil \log_2 (W * (W + 1)/2) \rceil$.

For example, the first signaling may be as shown in Table 3.

Table 3

| Information domain | Length of information domain | note |
|---|---|---|
| Time segment information | M*segment_time_bits | Time domain information indication for M second time segments |
| beam ID information | M*beam_bits | M beam indications |

The length of the first signaling may be: M*segment_time_bits + M*beam_bits. Optionally, the "*" in each embodiment of the present application may represent a multiplication sign, i.e., multiplication.

In an embodiment, each time segment information is independently indicated, and the beam information of each second time segment is independently indicated. The time segment information and the beam information respectively corresponding to each second time segment may be directly transmitted in the physical layer signaling.

It is assumed that the DCI indicates a duration W of the beam (such as fourteen symbols of one slot, and W=14), a maximum quantity M of segments (such as M=3), each segment time segment is indicated by a quantity of bits (segment_time_bits), and a quantity of bits occupied by each beam ID is beam_bits (such as one bit can indicate two pieces of beam information; and two bits can indicate four pieces of beam information).

Optionally, the base station may indicate the first configuration of the first time segment W to the NCR (M segments of target time information may be indicated separately, i.e. any second time segment may start from the first symbol and have a length of 1 to L). The indication information may be as shown in Table 4.

Table 4 Beam information indicated by the physical layer signaling (M=3)

| Information domain | | Length of information domain | Note |
|---|---|---|---|
| First second time segment | Time segment information | $\lceil \log_2 （W * (W + 1)/2) \rceil$ | Including start location, duration |
| | beam ID information | beam_bits | Such as, two bits |
| Second second time segment | Time segment information | $\lceil \log_2 （W * (W + 1)/2) \rceil$ | Including start location, duration |
| | beam ID information | beam_bits | Such as, two bits |
| Third second time segment | Time segment information | $\lceil \log_2 （W * (W + 1)/2) \rceil$ | Including start location, duration |
| | beam ID information | beam_bits | Such as, two bits |

The length of the first signaling may be: $M * (\text{beam}_{\text{bits}} + \lceil \log_2 （W * (W + 1)/2) \rceil)$.

Correspondingly, the NCR mobile termination (function) can receive the first signaling transmitted from the base station, and can determine the time segment information in the first time segment W and the beam information respectively corresponding to each second time segment based on the first signaling.

Optionally, each time segment information in the first time segment may be jointly indicated. Optionally, the beam information of each second time segment may be independently indicated;

Optionally, the length of the first signaling is: segment_time_bits + M*beam_bits, where segment_time_bits = *F* (W, M), F() is an operation function, the operation function is associated with a length W of the first time segment and a quantity M of the one or more second time segments, the second time segment is located in the first time segment, and beam_bits is a length of configuration information corresponding to one second time segment.

Optionally, the beam information of the first time segment length W occupies the information length (a quantity of bits), where a sum of lengths of the second time segment is W; M is a quantity of segments (a quantity of one or more second time segments in the first time segment); and segment_time_bits = F (W, M), where F() is an operation function, which is related to the indication length W and the quantity M of segments.

For example, the first signaling may be as shown in Table 5.

Table 5

| Information domain | Length of information domain | Note |
|---|---|---|
| Time segment information | segment_time_bits | Time domain information indication of M second time segments |
| beam ID information | M*beam_bits | M beam indications |

The information length of the first signaling may be: segment_time_bits + M*beam_bits.

Optionally, the first information and the second information may be jointly indicated.

Optionally, the beam information of length L is indicated, which occupies the information length (a quantity of bits), where a sum of a segment length of each second time segment is W, and the time segment information and the beam information respectively corresponding to each second time segment are jointly indicated: segment_time_bits = F (W, M, B), where F() is an operation function related to W, M and B, and B is a quantity of beam IDs that may be indicated.

For example, the first signaling may be as shown in Table 6.

Table 6

| Information domain | Length of information domain | Note |
|---|---|---|
| Second time segment/beam ID information | segment_time_bits | Jointly indicate time segment information, and beam information of each second time segment |

The information length of the first signaling may be: segment_time_bits.

Optionally, the higher-layer signaling may indicate or the DCI may indicate the time segment information within one first time segment W (such as one slot, or multiple continuous slots) and the beam information (first information and second information) respectively corresponding to each second time segment, or may also indicate the time segment information of multiple first time segments W and the beam information respectively corresponding to each second time segment.

Optionally, multiple first time segments may be continuous or discontinuous. Optionally, a unit of duration of the first time segment may be one slot, or several symbols, or multiple slots. The embodiments of the present application do not limit these. A length of the specified duration may be dynamically indicated through a physical layer indication.

Optionally, the first information includes:

third information, where the third information includes at least one of the following:

first location information of an intermediate time unit in the first time segment, where the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or

second location information of an intermediate time segment in the first time segment, where the second location information is used to divide the first time segment into one or more second time segments, the intermediate time segment determined by the second location information is used as the second time segment, and a quantity of the intermediate time segments is one or more.

Optionally, the intermediate time unit is at the first time segment, and the intermediate time unit may be used to divide the first time segment, that is, if the first signaling includes the first location information of the intermediate time unit, it is indicated that the first time segment is divided at a location indicated by the first location information.

Optionally, the intermediate time segment is at the first time segment, and the intermediate time segment may be used to divide the first time segment, that is, if the first signaling includes the second location information of the intermediate time segment, it is indicated that the first time segment is divided at the start location and the end location of the intermediate time segment.

In an embodiment, the time segment information in the first time segment may be jointly indicated, and the corresponding beam information may be independently indicated. Optionally, the time segment information in the first time segment and the beam information respectively corresponding to each second time segment may be transmitted in the physical layer signaling.

Optionally, the DCI can indicate the first time segment (duration W) (such as: fourteen symbols of one slot, W=14), the maximum quantity M of segments (such as M=3), the duration of each second time segment is indicated by the quantity segment_time_bits of bits, and the quantity of bits occupied by each beam ID is beam_bits.

Optionally, the base station may indicate the first configuration of the first time segment W to the NCR (the M segments of time segment information may be jointly indicated, that is, M second time segments are indicated through one information segment, including the start location and the length of each second time segment). The indication information may be as shown in Table 7.

Table 7 Example of indication of M=2

| Information domain | | Length of information domain | Note |
|---|---|---|---|
| First second time segment/second second time segment | Time segment information | $\lceil \log_2 (W) \rceil$ | Here the time segment information indicate a location P (intermediate time unit) in the length W, before P is the first second time segment, and after P is the second second time segment. |

(continued)

| Information domain | | Length of information domain | Note |
|---|---|---|---|
| Beam information | beam ID-1 information | beam_bits | Beam information of first second time segment |
| | beam ID-2 information | beam_bits | Beam information of second second time segment |

In case that M=2, an information length of the first signaling is: $2 * \text{beam}_{\text{bits}} + \lceil \log_2 （W) \rceil$.

FIG. 8 is a first schematic diagram of an indication of a first configuration according to an embodiment of the present application. As shown in FIG. 8, the time segment information having a length of $\lceil \log_2 （W) \rceil$ indicates a time location in time having a length of W (such as a point P of an intermediate time unit), then it may be considered that: before P is the first second time segment, and after P is the second second time segment.

It is assumed that W=14, M=2. In a signaling indication, a dividing point P of the two second time segments in W is indicated.

From symbol #0 to point P (including P) is the first second time segment (such as symbol #0-8#).

From symbol (P+1) point (excluding P) to symbol #13 is the second second time segment (such as symbol #8-13#).

Optionally, point P may also be included in the first second time segment, but not in the second second time segment, which is not limited by the embodiment of the present application. Optionally, point P may not be included in the first second time segment, but may be included in the second second time segment, which is not limited in the embodiment of the present application.

Optionally, if the P point indicated above is the first symbol or the last symbol within the duration W, it may be considered that one piece of time segment information is indicated.

Optionally, in order to reduce the quantity of bits occupied by the time segment information, considering that if it is divided into two time segments, P may not be located at the last symbol location, the quantity of bits occupied by the time segment information may be $\lceil \log_2 （W - L) \rceil$.

Optionally, referring to actual scheduling data, if a minimum value of the scheduling data is L (such as L=2), the quantity of bits occupied by the time segment information may be $\lceil \log_2 （W - L) \rceil$.

Optionally, the base station may indicate the first configuration of the first time segment W to the NCR (the M segments of time segment information may be jointly indicated, that is, the M segments of time segment information and the beam information respectively corresponding to each second time segment are indicated through one information segment). The indication information may be as shown in Table 8.

Table 8 Example of indication of M=3

| Information domain | | Length of information domain | Note |
|---|---|---|---|
| First second time segment/second second time segment/third second time segment | Time segment information | $\lceil \log_2 （W * (W + 1)/2 \rceil$ | Here the time segment information indicates a segment in a length L (start point is S, end point is E), before point S is the first second time segment, from point S to point E is the second time segment, and after point E is the third second time segment. |
| Beam information | beam ID-1 information | beam_bits | Beam information of first second time segment |
| | beam ID-2 information | beam_bits | Beam information of second second time segment |
| | beam ID-3 i nformation | beam_bits | Beam information of third second time segment |

In case that M=3, an information length of the first signaling is: 3 * $\text{beam}_{\text{bits}}$ + $\lceil \log_2 （W * (W + 1)/2 \rceil$ .

FIG. 9 is a second schematic diagram of an indication of a first configuration according to an embodiment of the present application. As shown in FIG. 9, the time segment information having the quantity of information bits being $\lceil \log_2 （W * (W + 1)/2 \rceil$ is indicated, a segment length in time having a length of W (start point S, end point E) is indicated, then it may be considered that: before point S is the first second time segment, from point S to point E is the second time segment (an intermediate time segment), and after point E is the third second time segment.

It is assumed that W=14, M=3. In the signaling indication, one second time segment in W (from point S to point E) is indicated, symbol #0 to point S (excluding S) is the first second time segment (such as symbol #0-4#). From symbol point S (including point S) to point E (including point E) is the second second time segment (such as symbol #5-#8). From symbol point E (excluding point E) to the end of the duration W is the third second time segment (such as symbol #8-#13).

Optionally, point S may not be included in the first second time segment, but may be included in the second second time segment, which is similar to point E, and the embodiment of the present application does not limit it. Optionally, point S may also be included in the first second time segment, but may not be included in the second second time segment, which is similar to point E, and the embodiment of the present application does not limit it.

In case that M=3, the base station indicates that in the NCR, the time segment information explicitly indicates the second time segment information, the first second time segment is before the second second time segment, and the third second time segment is after the second second time segment.

Optionally, referring to the above indicated point S and point E, if S is the first symbol in the duration W, and E is the last symbol, it may be considered that one piece of time segment information is indicated. Optionally, referring to the above indicated point S and point E, if S is the first symbol in the duration W, or E is the last symbol, may be considered that two pieces of time segment information are indicated.

Optionally, in order to reduce the quantity of bits occupied by the time segment information, considering that if it is divided into three second time segments, point S will not be located at the first symbol location, and point E will not be located at the last symbol location, the quantity of bits occupied by the time segment information may be $\lceil \log_2 （W - 2） * (W - 1)/2 \rceil$ .

Optionally, referring to actual scheduling data, if a minimum value of the scheduling data is L (such as L=2), the time segment information may be $\lceil \log_2 （W - L） * (W - L + 1)/2 \rceil$ .

Optionally, the terminal receives the indication transmitted from the base station. The time segment information within the duration L and the beam information respectively corresponding to each second time segment are determined.

Optionally, the second location information includes at least one of the following: a start location of the intermediate time segment; an end location of the intermediate time segment; or a length of the intermediate time segment.

Optionally, among the multiple second time segments, adjacent second time segments corresponding to the same beam information exist.

Accordingly, generating the first signaling includes at least one of the following: merging the adjacent second time segments corresponding to the same beam information into one second time segment to indicate the target beam configuration; or, taking the adjacent second time segments corresponding to the same beam information as different second time segments to indicate the target beam configuration.

Optionally, the second location information may include only the length of the intermediate time segment, and the length of the intermediate time segment is the same as the length of the first time segment. Therefore, it may be determined that the first time segment includes only one second time segment after segmentation, which overlaps with the first time segment. That is, it may be considered that one piece of time segment information is indicated in essence.

Optionally, the second information includes an identifier of a first configuration information combination; the first configuration information combination is used to indicate the configuration information respectively corresponding to the one or more second time segments respectively, the first configuration information combination is a partial configuration information combination among one or more second configuration information combinations, and identifiers of the one or more second configuration information combinations are known to the base station and a terminal.

Optionally, taking the configuration information combination as a beam information combination as an example, both the time segment information and the beam information may be jointly indicated. For example, by indicating a location between multiple second time segments (such as an intermediate time segment unit or an intermediate time segment), the second time segment is jointly indicated. The second information indicates one or more pieces of beam information, which is respectively in a one-to-one correspondence with one or more pieces of beam information. Optionally, the second information may indicate one piece of beam information, characterizing that one or more second time segments correspond to the same beam information. Optionally, the second information may indicate an identifier of a beam information combination (an identifier of a first configuration information combination), and the beam information combination is used to indicate the beam information respectively corresponding to one or more second time segments;

In an embodiment, it is assumed that the DCI indicates the first time segment W (such as fourteen symbols of one slot, W=14) and the maximum quantity of segments M (such as M=3), the quantity of bits (segment_time_bits) is used for indicating the duration of each second time segment, and the quantity of bits occupied by each beam ID beam_bits (such as one bit).

The joint indication of the time segment information and the beam information respectively corresponding to each second time segment may be carried out by the following means.

(1) In the first time segment W, in the M second time segments (such as M=3), if the beam indication information of the M second time segments is the same, the base station may indicate the M second time segments as one second time segment. For example: the second time segment starts with symbol 0 and ends with symbol (W-1).

(2) In the first time segment W, in the M second time segments (such as M=3), if the beam indication information of the two second time segments is the same, the base station may indicate the two second time segments as two second time segments respectively. For example: the second time segment starts with symbol 0 and the end symbol is less than (W-1).

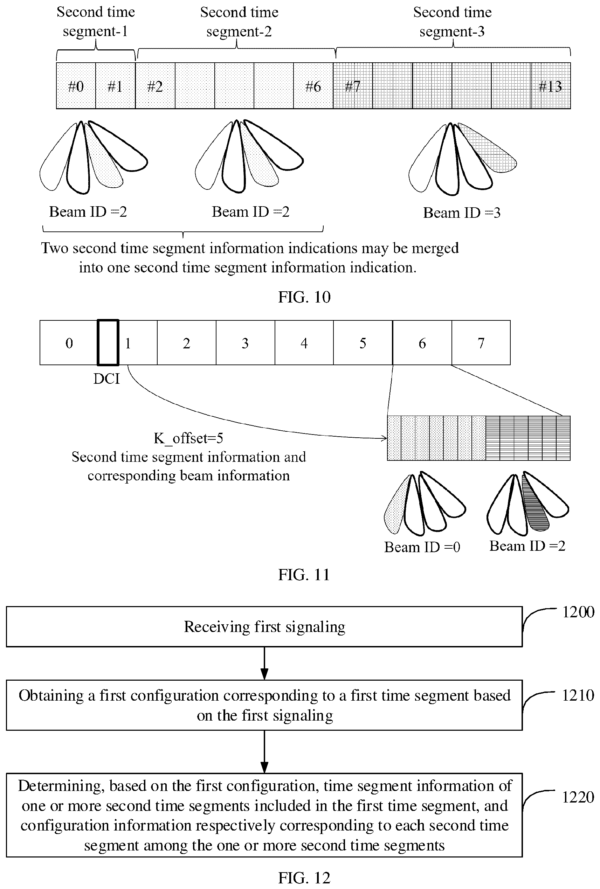

FIG. 10 is a third schematic diagram of an indication of a first configuration according to an embodiment of the present application. As shown in FIG. 10, in case that the base station indicates the following contents for the three second time segments and the related beams are: second time segment-1: start symbol #0, end symbol #1, beam ID=2; second time segment-2: start symbol #2, end symbol #6, beam ID=2; and second time segment-3: start symbol #7, end symbol #13, beam ID=3,

it is equivalent to two time segments and beam information, as follows: second time segment-1: start symbol #0, end symbol #6, beam ID=2; and second time segment-2: start symbol #7, end symbol #13, beam ID=3.

Optionally, M second time segments and corresponding beam information may be jointly indicated, and the quantity of segments in the time segment L (whose maximum is M segments, and actually may be one segment, two segments, ..., M segments) and the beam of each second time segment may be indicated through one information segment. For example, M=2, beam_bits=1 (indicating two beams), W=14. A type of information combination of the joint indication may be determined, that is, the required bit quantity segment_time_bits may be indicated.

In case that beam ID-1=beam ID-2=0, there is only one combination of time segment information (only one time segment, start point S=0, and length L=14). In case that beam ID-1=beam ID-2=1, there is only one combination of time segment information (only one time segment, start point S=0, and length L=14). In case that beam ID-1=0, beam ID-2=1, there are only W-1=13 combinations of time segment information (a combination of two time segments). In case that beam ID-1=1, beam ID-2=0, there are only W-1=13 combinations of time segment information (a combination of two time segments).

A total quantity of combinations is: 1+1+(W-1)+(W-1)=2W.

The quantity of bits required for joint information indication being segment_time_bits is: $\lceil \log_2 (2W) \rceil$. In case that W=14, segment_time_bits=5; that is, the quantity of bits indicated by the joint information is segment_time_bits=5.

The method of indicating the time segment information and the beam information respectively corresponding to each second time segment separately can obtain a one-bit gain (for example, in the same scenario, a separate indication method requires $2 + \lceil \log_2 (W - 1) \rceil = 6$).

Optionally, in the joint indication method, the quantity of information bits required for the time segment information and the beam information respectively corresponding to each second time segment being segment_time_bits is: $\lceil \log_2 (2W) \rceil$. In case that W=14, segment_time_bits=5.

Optionally, the joint indication method using segment_time_bits may be as shown in Table 9.

Table 9 M=2, an example of indicating up to 2 beams

| Number | Information domain | Information length | Note |
|---|---|---|---|
| 1 | Time Segment information | $\lceil \log_2(W) \rceil = 4$ | Indicate a dividing point P of two segments in duration W.<br><br>If point P is the last symbol in L, it indicates that only one segment exists. |

(continued)

| Number | Information domain | Information length | Note |
|---|---|---|---|
| 2 | Beam information | $\lceil \log_2(2W) \rceil - \lceil \log_2(W) \rceil = 1$ | In case that P is at the last symbol, 0 indicates that beam ID=0 is adopted; and 1 indicates that beam ID=1 is adopted. In case that P is not at the last symbol, 0 indicates that beams adopted by the first second time segment and the second time segment are 0 and 1 respectively; and 0 indicates that beams adopted by the first second time segment and the second time segment are 1 and 0 respectively. |

Optionally, after receiving the first signaling transmitted from the base station, the NCR mobile termination (function) can determine the first configuration (time segment information and the corresponding beam information) in the first time segment W.

Optionally, after receiving the first signaling, the terminal can perform the following steps. Step A: the first signaling (the first configuration in the first time segment W, i.e., the time segment information and the corresponding beam information) is parsed. Step B: the beam information corresponding to each time segment information is determined based on the time segment information.

In case that the "time segment information" indicates one second time segment (the dividing point P is at the last symbol): if the beam information is "0", the beam information of the second time segment is beam ID=0; and otherwise (that is, the beam information is "1",), the beam information of the second time segment is beam ID=1.

In case that the "time segment information" indicates two second time segments (the dividing point P is not at the last symbol): if the beam information is "0", the beam information of the first second time segment and the second second time segment are: beam ID=0 and 1 respectively; and if the beam information is "1", the beam information of the first second time segment and the second second time segment are respectively: beam ID=1 and 0.

Optionally, a corresponding relationship may exist between the time segment information and the corresponding beam information, or a direct relationship may not exist. For example: if the beam information is "0", the beam information of the time segment is beam ID=1; and if the beam information is "1", the beam information of the time segment is beam ID=0.

Optionally, beam ID=0 or 1 may refer to the number corresponding to the beam, or may be information of the beam configuration associated with a specific beam configured by the base station (such as: 0 indicates the first beam information configured by the base station, and 1 indicates the second beam information configured by the base station).

In an embodiment, it is assumed that the DCI indicates the first time segment W (such as fourteen symbols of one slot, W=14) and the maximum quantity of segments M (such as M=3), the quantity of bits (segment_time_bits) is used for indicating the duration of each second time segment, and the quantity of bits occupied by each beam ID beam_bits (such as one bit).

The joint indication of the time segment information and the beam information respectively corresponding to each second time segment may be carried out by the following means.

(1) In the first time segment W, in the M second time segments (such as M=3), if the beam indication information of the M segments (such as M=3) is the same, the base station may indicate the M second time segments as one second time segment. The second time segment starts with symbol 0 and has a length of L.

(2) In the first time segment W, in the M second time segments (such as M=3), if the beam indication information of two consecutive time segments is the same, the base station may indicate the M second time segments as M second time segments, and the M times segment having the same beam are one second time segment.

Optionally, the base station may indicate the first configuration of the first time segment W to the NCR, and M pieces of time segment information and the corresponding beam information are jointly indicated. A quantity of one or more second time segments in the duration L (whose maximum is M segments, and actually may be one segment, two segments, ..., M segments) and the beam of each second time segment may be indicated through one information segment.

For example, M=3, beam_bits=1 (indicating two beams), and L=14.

A type of information combination of the joint indication may be determined, that is, the required bit quantity segment_time_bits may be indicated.

In case that beam ID-1=beam ID-2=beam ID-3=0, there is only one combination of time segment information and corresponding beam information (only one second time segment, start point S=0, and length=14). In case that beam ID-1=beam ID-2=1=beam ID-3=1, there is only one combination of time segment information and corresponding beam information (only one second time segment, start point S=0, and length=14). In case that beam ID-1=beam ID-2=0, beam ID-3=1, there are only W-1=13 combinations of time segment information and the corresponding beam information (a combination of two second time segments). In case that beam ID-1=beam ID-2=1, beam ID-3=0, there are only W-1=13 combinations of time segment information and the corresponding beam information (a combination of two second time segments). In case that beam ID-1=1, beam ID-2=beam ID-3=0, there are only W-1=13 combinations of time segment information and the corresponding beam information (a combination of two second time segments). In case that beam ID-1=0, beam ID-2=beam ID-3=1, there are only W-1=13 combinations of time segment information and the corresponding beam information (a combination of two second time segments). In case that beam ID-3=0, there are (W - 1) * (W - 2)/2 combinations of time segmentation information and the corresponding beam information (a combination of three second time segments). In case that beam ID-1=1, beam ID-2=0, beam ID-3=1, there are (W - 1) * (W - 2)/2 combinations of time segmentation information and the corresponding beam information (a combination of three second time segments).

$$2 * (W - 1) * \frac{W-2}{2} + 4 * (W - 1) + 2 = W * (W + 1).$$

A total quantity of combinations is:

The quantity of bits required for the time segmentation information and the beam information respectively corresponding to each second time segment joint information indication being segment_time_bits is:

$\lceil \log_2 (W * (W + 1)) \rceil$. In case that W=14, segment_time_bits=8, that is, the quantity of bits indicated by the joint information is segment_time_bits=8.

The method of indicating the time segment information and the beam information respectively corresponding to each second time segment separately can obtain a two-bit gain (for example, in the same scenario, a separate indication method requires $3 + \lceil \log_2 ((W - 1) * (W - 2)/2) \rceil = 10)$.

Optionally, the time segment information and the beam information respectively corresponding to each second time segment are indicated through the joint indication method, and the quantity of information bits required being segment_time_bits is: $\lceil \log_2 (W * (W + 1)) \rceil$. In case that W=14, segment_time_bits=8.

Using segment_time_bits for joint indication may be as shown in Table 10.

Table 10 M=3, each time segment indicates up to two beams

| Number | Information domain | Information length | Note |
|---|---|---|---|
| 1 | Time segment information | $\lceil \log_2 (W * (W + 1)/2) \rceil = 7$ | Indicate second time segment information, and determine the quantity of the second time segment based on the start location and the end location of the second second time segment (refers to the following note 1). |

(continued)

| Number | Information domain | Information length | Note |
|---|---|---|---|
| 2 | Beam infor- mation | $\lceil \log_2(W * (W + 1)) \rceil$ $- \left\lceil \log_2 \left( W * \frac{(W + 1)}{2} \right) \right\rceil$ $= 1$ | Determine the beam information for each second time segment based on the beam information (refers to the following note 2). |

Note 1: time segment information indicates the second time segment information, and the quantity of the second time segments is determined based on the start location and the end location of the second second time segment as follows. If the start is 0 symbol and the end is the last symbol, it indicates that there is only one second time segment (second time segment 1); if the start is 0 symbol, or the end is the last symbol, it indicates that there are only two second time segments (second time segment 1, second time segment 2); and if the start symbol is greater than 0 symbol, and the end symbol is not the last symbol, it indicates that there are three second time segments (second time segment 1, second time segment 2, second time segment 3).

Note 2: the beam information for each second time segment is determined based on the beam information as follows.

If: it is determined that there is only one second time segment (second time segment 1), if beam information='0', it indicates that the beam ID of second time segment 1 is 0; otherwise it indicates that beam ID=1.

If it is determined that there are only two second time segments (second time segment 1, second time segment 2), if beam information='0', it indicates that the beam ID of second time segment 1 is 0, and the beam ID of second time segment 2 is 1; otherwise (beam information='1') it indicates that the beam ID of the second time segment 1 is 1, and the beam ID of the second time segment 2 is 0.

If: it is determined that there are only three second time segments (second time segment 1, second time segment 2, second time segment 3), if beam information='0', it indicates that the beam ID of the second time segment 1 is 0, the beam ID of the second time segment 2 is 1, and the beam ID of the second time segment 3 is 0; otherwise (beam information='1') it indicates that the beam ID of the second time segment 1 is 1, the beam ID of the second time segment 2 is 0, and the beam ID of the second time segment 3 is ID=1.

Optionally, after receiving the first signaling of the base station, the NCR mobile termination (function) can determine the first configuration (time segment information and corresponding beam information) within the first time segment W.

Optionally, the NCR mobile termination (function) can perform the following steps based on the first signaling.

(1) The first signaling is parsed.

(2) The quantity of the second time segments and the time information of each second time segment is determined based on the time segment information.
Optionally, the start is 0 symbol and the end is the last symbol, it indicates that there is only one second time segment (second time segment 1). Optionally, the start is 0 symbol or the end symbol is the last symbol, it indicates that there are only two second time segments (second time segment 1, second time segment 2). Optionally, the start symbol is greater than the 0 symbol and the end symbol is not the last symbol, it indicates that there are only three second time segments (second time segment 1, second time segment 2, second time segment 3).

(3) The beam information of each second time segment is determined based on the time segment information and the beam information respectively corresponding to each second time segment as follows.

Optionally, it is determined that there is only one second time segment (second time segment 1), if the beam information='0', it indicates that the beam ID of segment 1=0; otherwise, it indicates that the beam ID of segment 1=0; ID=1.

Optionally, it is determined that there are only two second time segments (second time segment 1, second time segment 2), if beam information='0', it indicates that the beam ID of second time segment 1 is 0, and the beam ID of second time segment 2 is 1; otherwise (beam information='1') it indicates that the beam ID of second time segment 1 is 1, and the beam ID of second time segment 2 is 0.

If: it is determined that there are only three second time segments (second time segment 1, second time segment 2, second time segment 3), if beam information='0', it indicates that the beam ID of second time segment 1 is 0, the beam ID of second time segment 2 is 1, and the beam ID of second time segment 3 is 0; otherwise (beam information='1') it indicates that the beam ID of second time segment 1 is 1, the beam ID of second time segment 2 is 0, and the beam ID of second time segment 3 is 1.

Optionally, a corresponding relationship may exist between the time segment information and the corresponding beam information, or a direct relationship may not exist. For example: if the beam information is "0", the beam information of the second time segment is beam ID=1; otherwise (beam information is "1") the beam information of the second time segment is beam ID=0.

Optionally, beam ID=0 or 1 may refer to the number corresponding to the beam, or may be information of the beam configuration associated with a specific beam configured by the base station (such as: 0 indicates the beam information of the first configuration configured by the base station, and 1 indicates the beam information of the second configuration configured by the base station).

Optionally, an encoding way of the first information and the second information in the first signaling includes: a start and length indicator value (SLIV) encoding way, or a first encoding way, where the first encoding way is a preset or protocol predefined encoding way.

Optionally, the time segment information includes at least two of the following: a start location, an end location, or a length, where the encoding way of at least two of the start location, the end location, or the length in the first signaling includes: a SLIV encoding way, or a second encoding way, where the second encoding way is a preset or protocol predefined encoding way.

Optionally, the encoding way of the start location (start), the length (length) or the end location (end) in the first signaling includes: the SLIV encoding way or the first encoding way.

Method 1: a traditional SLIV encoding way is adopted.

Step 1: start, end and W are converted into S and L parameters: S=start, where S is the start location; L=(start-end+1), where L is the length, if the length is directly transmitted, then L=length; N=maximum value ranges of W and L. An output SIV is calculated based on S and L: if $(L-1) \leq \lceil N/2 \rceil$, $SIV = N \cdot (L-1) + S$; otherwise $SIV = N \cdot (N-L+1) + (N-1-S)$, where $0 < L \leq N - S$

W=5 is taken as an example, relationships between the above input information and encoding is as shown in Table 11 below.

Table 11 SIV encoding output (taking N=5 as an example)

| N | S | L | SIV |
|---|---|---|-----|
| 5 | 0 | 1 | 0 |
| 5 | 0 | 2 | 5 |
| 5 | 0 | 3 | 10 |
| 5 | 0 | 4 | 14 |
| 5 | 0 | 5 | 9 |
| 5 | 1 | 1 | 1 |
| 5 | 1 | 2 | 6 |
| 5 | 1 | 3 | 11 |
| 5 | 1 | 4 | 13 |
| 5 | 2 | 1 | 2 |
| 5 | 2 | 2 | 7 |
| 5 | 2 | 3 | 12 |
| 5 | 3 | 1 | 3 |
| 5 | 3 | 2 | 8 |
| 5 | 4 | 1 | 4 |

If the encoding method is directly expressed by end, start and W, it is expressed as:

$$\text{if } (end - start \leq \lceil W/2 \rceil, \ SIV = W \cdot (end - start) + start;$$

$$\text{otherwise } SIV = W \cdot (W - L + 1) + (W - 1 - S), \ SIV = W \cdot (W - end + start) + (W - 1 - start).$$

Optionally, the first encoding way is a preset or protocol predefined encoding way, or satisfies: in the first encoding way, the start location or the end location is located at a high location, and information corresponding to the start location and/or the end location is located at a low location; or, in the first encoding way, the start location or the end location is located at a low location, and the information corresponding to the start location and/or the end location is located at a high location.

For example, the encoding way of L encoding in the low location and start in the high location can include the following steps.

Step 1: start, end and W are converted into S and L parameters: S=start, where S is the start location; L=(start-end+1), where L is the length, if the length is directly transmitted, then L=length; N=maximum value ranges of W and L.

step 2: encoding is performed based on start, L and N, and then $SIV = L + \sum_{i=1}^{start}(N + 1 - start)$. In case that start=0, $\sum_{i=1}^{start}(N + 1 - start) = 0$. Taking W=5, start_1=0 as an example, relationships between the above input information and encoding is as shown in Table 12 below.

Table 12 SIV encoding output (taking N=5 as an example)

| N | start | L | SIV |
|---|-------|---|-----|
| 5 | 0 | 0 | 0 |
| 5 | 0 | 1 | 1 |
| 5 | 0 | 2 | 2 |
| 5 | 0 | 3 | 3 |
| 5 | 0 | 4 | 4 |
| 5 | 1 | 0 | 5 |
| 5 | 1 | 1 | 6 |
| 5 | 1 | 2 | 7 |
| 5 | 1 | 3 | 8 |
| 5 | 2 | 0 | 9 |
| 5 | 2 | 1 | 10 |
| 5 | 2 | 2 | 11 |
| 5 | 3 | 0 | 12 |
| 5 | 3 | 1 | 13 |
| 5 | 4 | 0 | 14 |

If the coding method is directly expressed by start, end, and W, it is expressed as: $SIV = W - start + \sum_{i=1}^{end - start}(W + 1 - start)$.

Optionally, before using the above encoding method, the type combination of the above indication may be determined, and the quantity of indication information bits required may be determined based on the type combination.

For example, it is assumed that W=5, it may be known that start has the following combinations based on the relationship between the three location points to be indicated (0<=start<=end<=W-1): in case that start=0, end has W=5 possible values; in case that start=1, end has W-1=4 possible values; in case that start=2, end has W-2=3 possible values; in case that start=3, end has W-3=2 possible values; and in case that start=4, end has W-4=1 possible value.

It may be calculated based on the formula: $\sum_{i=0}^{W-1}(W - i) = \frac{W*(W+1)}{2}$.

That is, in case that $W=5, \frac{W*(W+1)}{2} = 15$. That is, the quantity of bits required for the indication information is: $\left\lceil \log_2 \left( \frac{W*(W+1)}{2} \right) \right\rceil = 4$.

Optionally, the method further includes: determining effective time of the first configuration; and transmitting fourth information to a terminal, where the fourth information is used to indicate the effective time of the first configuration, where the fourth information is included in the first signaling, or the fourth information is carried in other signaling, or the fourth information is separate signaling.

Optionally, after the base station indicates the first signaling, the NCR needs to parse the first signaling and transmit it to a forwarding module of the NCR through an internal interface. Therefore, it is necessary to determine the effective time of the first configuration.

Optionally, determining the effective time of the first configuration includes: obtaining capability information of an NCR, and determining the effective time based on the capability information, where the capability information is used to indicate minimum effective time supported by the NCR.

Optionally, the NCR is an NCR associated with a terminal, for example, the receiver (terminal) of the first signaling may be a mobile termination (function) of the NCR.

Optionally, when indicating beam information, the base station may indicate the time location of the first time segment W in DCI. For example, a k_offset value is added in the DCI, where k_offset is time from receiving the DCI and to a first slot where the first time segment W is located, whose unit may be slot or ms, which is not limited in the embodiment of the present application.

FIG. 11 is a fourth schematic diagram of an indication of a first configuration according to an embodiment of the present application. As shown in FIG. 11, the NCR receives the DCI at slot 0, the DCI includes time segment information and corresponding beam information, k_offset=5 is indicated simultaneously, and the NCR then applies the beam information on slot 6.

Optionally, an NCR device has minimum application time, that is, minimum effective time T0, that is, time from moment DCI_t when the base station transmits signaling to an application time of the beam indication should not be earlier than DCI_t+T0. The following describes the method for determining time T0.

Generally, T0 may be divided into the following two parts: T0=DCI_processing_time + signal_delay, where DCI_processing_time refers to the time for the NCR mobile termination (function) to detect the DCI and read the data; and signal delay is a delay from the NCR mobile termination to the NCR forwarding.

Optionally, the NCR can report DCI_processing_time and signal delay to the base station in a form of capability reporting. Table 13 and Table 14 show some examples of NCR reporting capability parameters.

Table 13 DCI_processing_time capability parameters

| SCS (subcarrier spacing) | Optional parameter set (symbol) | Note |
| --- | --- | --- |
| scs-60 kHz | {s7, s14, s28} | s7 corresponds to 7 symbols |
| scs-120 kHz | {s14, s28} | s14 corresponds to 14 symbols |

Table 14 signal_delay capability parameters

| SCS (subcarrier spacing) | Optional parameter set (symbol) | Note |
| --- | --- | --- |
| scs-60 kHz | {s32, s56, s112, s224} | Respectively correspond to {0.5 ms, 1 ms, 2 ms, 4 ms} |
| scs-120 kHz | { s56, s112, s224, s448} | Respectively correspond to {0.5 ms, 1 ms, 2 ms, 4 ms} |

In the method for configuration information indication provided by the embodiment of the present application, by dividing the first time segment into multiple time segments, configuring a beam direction for each second time segment, and indicating the first signaling to the NCR mobile termination, the time segment information of one or more second time segments included in the first time segment, and the configuration information respectively corresponding to each second time segment among the one or more second time segments is indicated to the terminal. Dynamic and flexible time segment indication is adopted for the first time segment, which avoids the NCR to detect scheduling information of all terminals, reduces capability requirements for the NCR, and facilitates network deployment.

FIG. 12 is a second schematic flowchart of a method for configuration information indication according to an embodiment of the present application. As shown in FIG. 12, an embodiment of the application provides a method for configuration information indication, performed by an NCR mobile termination (function), and including the following steps.

Step 1200: receiving first signaling.

Step 1210: obtaining a first configuration corresponding to a first time segment based on the first signaling.

Step 1220: determining, based on the first configuration, time segment information of one or more second time segments included in the first time segment, and configuration information respectively corresponding to each second time segment among the one or more second time segments.

Optionally, an "agreed duration" (that is, a first time segment), may be divided into M second time segments, and first signaling is generated. The first signaling is transmitted to the NCR to indicate configuration information corresponding to each second time segment to the NCR. Optionally, a quantity M of segments (a quantity of one or more second time segments), which is a parameter of the "agreed duration" (that is, the first time segment), may be configured by the base station. For example, the first time segment may be a slot of fourteen symbols.

Optionally, time segment information of one or more second time segments included in the first time segment, and the configuration information respectively corresponding to each second time segment among the one or more second time segments, are dynamically indicated to the NCR through the first signaling.

Optionally, the NCR mobile termination (function) receives the first signaling, obtain the first configuration corresponding to the first time segment based on the first signaling, and then determines, based on the first configuration, the time segment information of one or more second time segments included in the first time segment, and the configuration information respectively corresponding to each second time segment among the one or more second time segments.

In the method for configuration information indication provided by the embodiment of the present application, by dividing the first time segment into multiple time segments, configuring a beam direction for each second time segment, and indicating the first signaling to the NCR mobile termination, the time segment information of one or more second time segments included in the first time segment, and the configuration information respectively corresponding to each second time segment among the one or more second time segments is indicated to the terminal. Dynamic and flexible time segment indication is adopted for the first time segment, which avoids the NCR to detect scheduling information of all terminals, reduces capability requirements for the NCR, and facilitates network deployment.

Optionally, the configuration information includes beam information.

Optionally, an "agreed duration" (that is, a first time segment), may be divided into M second time segments, and first signaling is generated. The first signaling is transmitted to the NCR to indicate beam information, such as a beam direction, corresponding to each second time segment to the NCR.

Optionally, the time segment information of one or more second time segments included in the first time segment, and beam information respectively corresponding to each second time segment among the one or more second time segments, are dynamically indicated to the NCR through the first signaling.

Optionally, in order to support beamforming of a forwarding link to improve receiving performance of the terminal side, beamforming may be performed by two methods: a semi-static configuration and a dynamic indication. The embodiment of the present application can dynamically indicate beam information on the forwarding link close to the terminal side.

Optionally, the first signaling includes a first index corresponding to the first time segment, the first index is used to indicate a first configuration corresponding to the first index in a time domain resource allocation (TDRA) table, where the first index is one of one or more indexes included in the TDRA table, each index in the TDRA table corresponds to a type of configuration, and different indexes correspond to different configurations.

Optionally, an indication method of the first configuration corresponding to the first time segment may include: a TDRA table method (time segmentation information and beam information list indicated by a high configuration), which may be implemented by indicating an index value (of the first index) through a physical layer or a MAC layer.

Optionally, the base station may pre-configure the TDRA table. Optionally, the TDRA table may be indicated to the NCR mobile termination (function) after pre-configuration by the base station. Optionally, the TDRA table may be indicated to the terminal by the base station through higher-layer signaling. Optionally, the TDRA table may be pre-defined by the protocol. Optionally, the TDRA table may be pre-set. Optionally, the TDRA table may be jointly maintained by the base station and the NCR mobile termination (function). Optionally, the TDRA table may include multiple second indexes, each second index corresponding to one configuration.

Optionally, each configuration is a segmentation information of a first time segment segmented into one or more second time segments, and configuration information corresponding to each second time segment. Optionally, each configuration is segmentation information of a first time segment segmented into one or more second time segments, and beam information respectively corresponding to each second time segment.

Optionally, the TDRA table may be as shown in Table 1.

Table 1

| Second index | Second time segment-1 | Second time segment-2 | Second time segment-3 | Note |
|---|---|---|---|---|
| 0 | S=0, L=2 beam ID=0 | S=2, L=5 beam ID=2 | S=7, L=7 beam ID=3 | Indicated by three time segments, where each second time segment is continuous. |
| 1 | S=0, L=2 beam ID=0 | S=2, L=12 beam ID=2 | | Indicated by two time segments, where each second time segment is continuous. |
| 2 | S=0, L=14 beam ID=3 | | | Indicated by one time segment, where each second time segment is continuous. |
| 4 | S=0, L=4 beam ID=1 | S=7, L=4 beam ID=2 | | Indicated by two time segments, where each second time segment is not continuous. |

It should be noted that in Table 1, S represents a start symbol of a beam indication segment, and L represents a length indication of the beam segment. In addition, the start symbol S and an end symbol E may also be used to represent the time segment information, where E=S+L.

It should be noted that in case that the two segments are not continuous, that is, a symbol without indication is skipped, a beam direction of a corresponding symbol may be a default beam direction or a semi-statically configured direction. Accordingly, the beam ID represents a beam direction parameter of the beam. It should be noted that Table 1 is only an example of the TDRA table and is not a limitation to the TDRA table.

Optionally, the base station may indicate the index value of the first index to the terminal through the physical layer signaling or the MAC layer indication, and the terminal can determine the first configuration corresponding to the first index from the TDRA table based on an indication of the first index, and then determine the time segmentation information in the first time segment (one or more second time segments), and the beam information corresponding to each second time segment.

For example, as shown in FIG. 6, the base station may indicate the index value of the first index as 0 through the physical layer signaling, then the NCR mobile termination (function) transmits three beams in the first time segment indicated by the base station, and the corresponding time segment information and the beam information respectively corresponding to each second time segment may be:

time segment-1 uses beam ID=0, that is, symbol #0 and symbol #1 both use beam ID=0; and time segment-2 uses beam ID=2, that is, symbols #2/#3/#4/#5/#6 all use beam ID=2, and so on.

Optionally, in case that the first signaling is used to indicate first configurations respectively corresponding to multiple first time segments, first indexes respectively corresponding to each first time segment among the multiple first time segments are partially the same, completely the same, or completely different.

Optionally, the first configurations corresponding to multiple first time segments may be indicated simultaneously. Optionally, different first time segments can correspond to the same first configuration. Optionally, different first time segments can correspond to different first configurations.

In an embodiment, the base station can first configure the TDRA table, and then configure the TDRA table through the higher-layer signaling (or the protocol agreement). The table includes multiple row information (multiple second indexes) (which is also called multiple entry (entity) information), each row contains one or more actual segment information, specifically including: each second time segment: start location (start), length (length) or end location (end); and the configuration information (the beam information) corresponding to each second time segment, such as beam direction, beam ID, etc., where the base station needs to indicate a duration of each row indication, which may be one slot (for example: fourteen symbols) or multiple slots.

Optionally, the TDRA table may be as shown in Table 2.

Table 2

| Second index | Second time segment-1 | Second time segment-2 | Second time segment-3 | Note |
|---|---|---|---|---|
| 0 | S=0, L=2 beam ID=0 | S=2, L=5 beam ID=2 | S=7, L=7 beam ID=3 | Indicated by three time segments, where each second time segment is continuous |
| 1 | S=0, L=7 beam ID=0 | S=7, L=7 beam ID=2 | | Indicated by two time segments, where each second time segment is continuous |
| 2 | S=0, L=14 beam ID=3 | | | Indicated by one time segment, where each second time segment is continuous |
| 4 | S=0, L=4 beam ID=1 | S=7, L=4 beam ID=2 | | Indicated by two time segments, where each second time segment is continuous |

A duration of each row indication is one slot (which may be called the agreed duration), S represents the start symbol of the beam indication segment, L represents the length indication of the beam segment; and beam ID represents the beam direction of the beam.

Specifically, the base station can configure the multi-time segment beam table through the following signaling: beam-TimeDomainList ::=SEQUENCE (SIZE(1.. maxNroRow)) OF RowSegment-TimeDomain

//configure a multi-time beam indication table beam-TimeDomainList, where the table contains at most maxNroRow rows (such as maxNroRow=32 rows) of RowSegment-TimeDomain (configuration of each row of information);

RowSegment-TimeDomain ::= MultiSegment-Time-beam    SEQUENCE (SIZE(1..maxM)) OF PerMultiSegment-Time-beam}

//each row of time segment & beam information content RowSegment-TimeDomain, where each row contains at most maxM time segment information (such as: M=3) PerMultiSegment-Time-beam (beam information for each time segment)

PerMultiSegment-Time-beam::= SEQUENCE {

 beamID        ENUMERATED {beam0,  beam1, beam2, beam3}, //Each segment of information contains a BEAM ID

 startSymbolAndLength  INTEGER (0..127), //each segment of information contains a time point information (start symbol, and symbol length).

Configuration content of the startSymbolAndLength includes two values: the start symbol S, and the symbol length L. The calculation relationship method can refer to the related art and will not be repeated here.

It should be noted that: in the present embodiment, all methods indicating the time domain information of M=3 can use this calculation method. Optionally, the base station may indicate the first index through the physical layer signaling to indicate the first configuration; and the terminal may determine the first configuration based on the first index. Optionally, when indicating multiple beam information of one agreed duration (first time segment) (configuration information respectively corresponding to multiple second time segments, such as beam information respectively corresponding to multiple second time segments), $\lceil \log_2 \ (\text{maxNroRow}) \rceil$ bits are required.

Optionally, as shown in FIG. 7, if the base station indicates beam information of three agreed durations (first time segments) W through the physical layer signaling, where the indicated index values are 1, 2 and 3, situations of the NCR may transmit beams and related time segments on three indicated slots are as follows.

The control signaling indicates beam information of three first time segments W (each first time segment has a duration of one slot, and contains fourteen symbols). It should be noted that in the beam indication, only part of symbols within the time segment W may be indicated, and some symbols within the time segment W are not indicated. For example, no beam information indication exists in symbols #4/#5/#6 in slot-3, and the NCR may perform transmission based on a default beam, or transmit no information, which is not limited in the embodiment of the present application.

Optionally, the first signaling includes first information and/or second information, where: the first information is used to indicate one or more second time segment information; and the second information is used to indicate configuration information respectively corresponding to the one or more second time segments.

Optionally, the indication method of the first configuration corresponding to the first time segment may include: directly and dynamically indicating the time segmentation information and beam information through the DCI or a medium access control-control element (MAC-CE), where the specific indication means may include: second time segment allocation indication, second time segment joint indication, time segment and beam information joint indication and other means.

Optionally, the time segment information and the beam information respectively corresponding to each second time segment may be directly transmitted in the physical layer signaling, which can make scheduling of the base station more flexible. Optionally, the time segment information may be indicated by the first information. Optionally, the configuration information respectively corresponding to each second time segment may be indicated by the second information. Optionally, the first information and the second information may be indicated together or simultaneously. Optionally, the first information and the second information may be indicated separately.

For example, the base station can configure the DCI to indicate the first time segment (the duration is W, such as fourteen symbols of a time slot, W=14), and indicate a maximum quantity M of segments (such as M=3), a quantity of bits (segment_time_bits) is used for indicating a duration of each second time segment, and a quantity of bits occupied by each beam ID is beam_bits (such as 2 bits). The base station can then indicate the first information and the second information "segmentation information of the first time segment and beam information respectively corresponding to each second time segment" to the NCR through the physical layer signaling.

Optionally, the first signaling includes one or more pieces of first information, and the first information and the second time segments are in a one-to-one correspondence. Optionally, segmentation information of the first time segment, that is, an indication of the time segment information, may be indicated independently. Optionally, the first signaling includes one or more pieces of second information, and the second information and the second time segments are in a one-to-one correspondence.

Optionally, the beam information may be indicated independently; that is, the first information and the second information may be indicated independently, each first information indicates one second time segment, and each second information indicates a beam information corresponding to one second time segment;

Optionally, the length of the first signaling is: M*segment_time_bits + M*beam_bits, where $\text{segment\_time\_bits} = \lceil \log_2 \ (W * (W+1)/2) \rceil$, M is a quantity of the one or more second time segments, W is a length of the first time segment, and beam_bits is a length of configuration information corresponding to one second time segment.

For example, the first signaling may indicate: beam information of the first time segment length W, where each second time segment length can range from 1 to W, and a start location of each second time segment is any location within the duration W, indicating that a quantity of bits occupied by each time segment information is: $\text{segment\_time\_bits} = \lceil \log_2 \ (W * (W+1)/2) \rceil$.

For example, the first signaling may be as shown in Table 3.

Table 3

| Information domain | Length of information domain | note |
|---|---|---|
| Time segment information | M*segment_time_bits | Time domain information indication for M second time segments |
| beam ID information | M*beam_bits | M beam indications |

The length of the first signaling may be: M*segment_time_bits + M*beam_bits.

In an embodiment, each time segment information is independently indicated, and beam information is independently indicated. The time segment information and the corresponding beam information may be directly transmitted in the physical layer signaling.

It is assumed that the DCI indicates a duration W of the beam (such as fourteen symbols of one slot, and W=14), a maximum quantity M of segments (such as M=3), each segment time segment is indicated by a quantity of bits (segment_time_bits), and a quantity of bits occupied by each beam ID is beam_bits (such as one bit can indicate two pieces of beam information; and two bits can indicate four pieces of beam information).

Optionally, the base station may indicate the first configuration of the first time segment W to the NCR (M segments of target time information may be indicated separately, i.e. any second time segment may start from the first symbol and have a length of 1 to L). The indication information may be as shown in Table 4.

Table 4 Beam information indicated by the physical layer signaling (M=3)

| Information domain | | Length of information domain | Note |
|---|---|---|---|
| First second time segment | Time segment information | $\lceil \log_2 \left( W * (W+1)/2 \right) \rceil$ | Including start location, duration |
| | beam ID information | beam_bits | Such as, two bits |
| Second second time segment | Time segment information | $\lceil \log_2 \left( W * (W+1)/2 \right) \rceil$ | Including start location, duration |
| | beam ID information | beam_bits | Such as, two bits |
| Third second time segment | Time segment information | $\lceil \log_2 \left( W * (W+1)/2 \right) \rceil$ | Including start location, duration |
| | beam ID information | beam_bits | Such as, two bits |

The length of the first signaling may be: $M * \left( \text{beam}_{\text{bits}} + \lceil \log_2 \left( W * (W+1)/2 \right) \rceil \right)$.

Correspondingly, the NCR mobile termination (function) can receive the first signaling transmitted from the base station, and can determine the time segment information in the first time segment W and the beam information respectively corresponding to each second time segment based on the first signaling.

Optionally, each second time segment in the first time segment may be jointly indicated. Optionally, the beam information may be independently indicated.

Optionally, the length of the first signaling is: segment_time_bits + M*beam_bits, where segment_time_bits = *F* (W, M), F() is an operation function, the operation function is associated with a length W of the first time segment and a quantity M of the one or more second time segments, the second time segment is located in the first time segment, and beam_bits is a length of configuration information corresponding to one second time segment.

Optionally, the beam information of the first time segment length W occupies the information length (a quantity of bits), where a sum of lengths of the second time segment is W; M is a quantity of segments (a quantity of one or more second time segments in the first time segment); and segment_time_bits = F (W, M), where F() is an operation function, which is related to the indication length W and the quantity M of segments.

For example, the first signaling may be as shown in Table 5.

Table 5

| Information domain | Length of information domain | Note |
|---|---|---|
| Time segment information | segment_time_bits | Time domain information indication of M second time segments |
| beam ID information | M*beam_bits | M beam indications |

The information length of the first signaling may be: segment_time_bits + M*beam_bits.

Optionally, the first information and the second information may be jointly indicated.

Optionally, the beam information of length L is indicated, which occupies the information length (a quantity of bits), where a sum of a segment length of each second time segment is W, and the time segment information and the corresponding beam information are jointly indicated: segment_time_bits = F (W, M, B), where F() is an operation function related to W, M and B, and B is a quantity of beam IDs that may be indicated.

For example, the first signaling may be as shown in Table 6.

Table 6

| Information domain | Length of information domain | Note |
|---|---|---|
| Second time segment/beam ID information | segment_time_bits | Jointly indicate time segment information, and beam information of each second time segment |

The information length of the first signaling may be: segment_time_bits.

Optionally, the higher-layer signaling may indicate or the DCI may indicate the time segment information and the corresponding beam information (first information and second information) within a first time segment W (such as one slot, or multiple consecutive slots), and may also indicate the time segment information of multiple first time segments W and the corresponding beam information.

Optionally, multiple first time segments may be continuous or discontinuous. Optionally, a unit of duration of the first time segment may be one slot, or several symbols, or multiple slots. The embodiments of the present application do not limit these. A length of the specified duration may be dynamically indicated through a physical layer indication.

Optionally, the first information includes:

third information, where the third information includes at least one of the following:

first location information of an intermediate time unit in the first time segment, where the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or

second location information of an intermediate time segment in the first time segment, where the second location information is used to divide the first time segment into one or more second time segments, the intermediate time segment determined by the second location information is used as the second time segment, and a quantity of the intermediate time segments is one or more.

In an embodiment, the time segment information in the first time segment may be jointly indicated, and the corresponding beam information may be independently indicated.

Optionally, the time segment information within the first time segment and the corresponding beam information may be transmitted in the physical layer signaling.

Optionally, the DCI can indicate the first time segment (duration W) (such as: fourteen symbols of one slot, W=14), the maximum quantity M of segments (such as M=3), the duration of each second time segment is indicated by the quantity segment_time_bits of bits, and the quantity of bits occupied by each beam ID is beam_bits

Optionally, the base station may indicate the first configuration of the first time segment W to the NCR (the M segments of target time information may be jointly indicated, that is, M time segments are indicated through one information segment, including the start location and the length of each time segment). The indication information may be as shown in Table 7.

Table 7 Example of indication of M=2

| Information domain | | Length of information domain | Note |
|---|---|---|---|
| First second time segment/second second time segment | Time segment information | $\lceil \log_2 (W) \rceil$ | Here the time segment information indicate a location P (intermediate time unit) in the length W, before P is the first second time segment, and after P is the second second time segment. |

(continued)

| Information domain | | Length of information domain | Note |
|---|---|---|---|
| Beam information | beam ID-1 information | beam_bits | Beam information of first second time segment |
| | beam ID-2 information | beam_bits | Beam information of second second time segment |

In case that M=2, an information length of the first signaling is: $2 * beam_{bits} + \lceil \log_2 （W) \rceil$.

As shown in FIG. 8, the time segment information having a length of $\lceil \log_2 （W) \rceil$ indicates a time location in time having a length of W (such as a point P of an intermediate time unit), then it may be considered that: before P is the first second time segment, and after P is the second second time segment.

It is assumed that W=14, M=2. In a signaling indication, a dividing point P of the two time segments in W is indicated. From symbol #0 to point P (including P) is the first second time segment (such as symbol #0-8#). From symbol (P+1) point (excluding P) to symbol #13 is the second second time segment (such as symbol #8-13#).

Optionally, point P may also be included in the first second time segment, but not in the second second time segment, which is not limited by the embodiment of the present application. Optionally, point P may not be included in the first second time segment, but may be included in the second second time segment, which is not limited in the embodiment of the present application.

Optionally, if the P point indicated above is the first symbol or the last symbol within the duration W, it may be considered that one time segment is indicated. Optionally, in order to reduce the quantity of bits occupied by the time segment information, considering that if it is divided into two time segments, P may not be located at the last symbol location, the quantity of bits occupied by the time segment information may be $\lceil \log_2 （W - L) \rceil$.

Optionally, referring to actual scheduling data, if a minimum value of the scheduling data is L (such as L=2), the quantity of bits occupied by the time segment information may be $\lceil \log_2 （W - L) \rceil$.

Optionally, the base station may indicate the first configuration of the first time segment W to the NCR (the M segments of time segment information may be jointly indicated, that is, the M segments of time segment information are indicated through one information segment, including the start location and the length of each time segment). The indication information may be as shown in Table 8.

Table 8 Example of indication of M=3

| Information domain | | Length of information domain | Note |
|---|---|---|---|
| First second time segment/second second time segment/third second time segment | Time segment information | $\lceil \log_2 （W * (W + 1)/2) \rceil$ | Here the time segment information indicates a segment in a length L (start point is S, end point is E), before point S is the first second time segment, from point S to point E is the second time segment, and after point E is the third second time segment. |
| Beam information | beam ID-1 information | beam_bits | Beam information of first second time segment |
| | beam ID-2 information | beam_bits | Beam information of second second time segment |
| | beam ID-3 i nformation | beam_bits | Beam information of third second time segment |

In case that M=3, an information length of the first signaling is: $3 * beam_{bits} + \lceil \log_2 （W * (W + 1)/2) \rceil$.

As shown in FIG. 9, the time segment information having the quantity of information bits being

$\lceil \log_2 （W * (W + 1)/2 \rceil$ is indicated, a segment length in time having a length of W (start point S, end point E) is indicated, then it may be considered that: before point S is the first second time segment, from point S to point E is the second time segment, and after point E is the third second time segment.

It is assumed that W=14, M=3. In the signaling indication, one time segment in W (from point S to point E) is indicated, from symbol #0 to point S (excluding S) is the first second time segment (such as symbol #0-4#). From symbol point S (including point S) to point E (including point E) is the second second time segment (such as symbol #5-#8). From symbol point E (excluding point E) to the end of the duration W is the third second time segment (such as symbol #8-#13).

Optionally, point S may not be included in the first second time segment, but may be included in the second second time segment, which is similar to point E, and the embodiment of the present application does not limit it. Optionally, point S may also be included in the first second time segment, but may not be included in the second second time segment, which is similar to point E, and the embodiment of the present application does not limit it.

In case that M=3, the base station indicates that in the NCR, the time segment information explicitly indicates the second time segment information, the first second time segment is before the second second time segment, and the third second time segment is after the second second time segment.

Optionally, referring to the above indicated point S and point E, if S is the first symbol in the duration W, and E is the last symbol, it may be considered that one second time segment is indicated. Optionally, referring to the above indicated point S and point E, if S is the first symbol in the duration W, or E is the last symbol, may be considered that two second time segments are indicated.

Optionally, in order to reduce the quantity of bits occupied by the time segment information, considering that if it is divided into three time segments, point S will not be located at the first symbol location and point E will not be located at the last symbol location, the quantity of bits occupied by the time segment information may be $\lceil \log_2 （W - 2） * (W - 1)/2 \rceil$.

Optionally, referring to actual scheduling data, if a minimum value of the scheduling data is L (such as L=2), the quantity of bits occupied by the time segment information may be $\lceil \log_2 （W - L） * (W - L + 1)/2 \rceil$.

Optionally, the terminal receives the indication transmitted from the base station, and determines the time segment information within the duration L, and the beam information respectively corresponding to each second time segment.

Optionally, the second location information includes at least one of the following: a start location of the intermediate time segment; an end location of the intermediate time segment; or a length of the intermediate time segment.

Optionally, among the multiple second time segments, adjacent second time segments corresponding to the same beam information exist.

Accordingly, generating first signaling by the base station includes at least one of the following: merging the adjacent second time segments corresponding to the same beam information into one second time segment to indicate the target beam configuration; or, taking the adjacent second time segments corresponding to the same beam information as different second time segments to indicate the target beam configuration.

In an embodiment, it is assumed that the DCI indicates the first time segment W (such as fourteen symbols of one slot, W=14) and the maximum quantity of segments M (such as M=3), the quantity of bits (segment_time_bits) is used for indicating the duration of each second time segment, and the quantity of bits occupied by each beam ID beam_bits (such as one bit).

The time segment information and the corresponding beam information may be jointly indicated by the following means.

(1) In the first time segment W, in the M second time segments (such as M=3), if the beam indication information of the M second time segments is the same, the base station may indicate the M second time segments as one second time segment. For example: the second time segment starts with symbol 0 and ends with symbol (W-1).

(2) In the first time segment W, in the M second time segments (such as M=3), if the beam indication information of the two second time segments is the same, the base station may indicate the two second time segments as two second time segments respectively. For example: the second time segment starts with symbol 0 and the end symbol is less than (W-1).

As shown in FIG. 10, in case that the base station indicates the following contents for the three second time segments and the related beams are:

second time segment-1: start symbol #0, end symbol #1, beam ID=2;

second time segment-2: start symbol #2, end symbol #6, beam ID=2; and

second time segment-3: start symbol #7, end symbol #13, beam ID=3,

it is equivalent to two time segments and beam information, as follows:

second time segment-1: start symbol #0, end symbol #6, beam ID=2; and

second time segment-2: start symbol #7, end symbol #13, beam ID=3.

Optionally, M second time segments and corresponding beam information may be jointly indicated, and the quantity of segments in the time segment L (whose maximum is M segments, and actually may be one segment, two segments, ..., M segments) and the beam of each second time segment may be indicated through one information segment.

For example, M=2, beam_bits=1 (indicating two beams), W=14.

A type of information combination of the joint indication may be determined, that is, the required bit quantity segment_time_bits may be indicated.

In case that beam ID-1=beam ID-2=0, there is only one combination of time segment information (only one time segment, start point S=0, and length L=14). In case that beam ID-1=beam ID-2=1, there is only one combination of time segment information (only one time segment, start point S=0, and length L=14). In case that beam ID-1=0, beam ID-2=1, there are only W-1=13 combinations of time segment information (a combination of two time segments). In case that beam ID-1=1, beam ID-2=0, there are only W-1=13 combinations of time segment information (a combination of two time segments).

A total quantity of combinations is: 1+1+(W-1)+(W-1)=2W.

The quantity of bits required for joint information indication being segment_time_bits is: $\lceil \log_2 （2W）\rceil$. In case that W=14, segment_time_bits=5; that is, the quantity of bits indicated by the joint information is segment_time_bits=5.

Compared to the method of indicating the second time segment and beam information separately, a one-bit gain may be obtained (for example, in the same scenario, a separate indication method requires $2 + \lceil \log_2 （W-1）\rceil = 6$).

Optionally, in the joint indication method, the quantity of information bits required for the second time segment and the beam information being segment_time_bits is: $\lceil \log_2 （2W）\rceil$. In case that W=14, segment_time_bits=5.

Optionally, the joint indication method using segment_time_bits may be as shown in Table 9.

Table 9 M=2, an example of indicating up to 2 beams

| Number | Information domain | Information length | Note |
|---|---|---|---|
| 1 | Time Segment information | $\lceil \log_2(W) \rceil = 4$ | Indicate a dividing point P of two segments in duration W. If point P is the last symbol in L, it indicates that only one segment exists. |
| 2 | Beam information | $\lceil \log_2(2W) \rceil - \lceil \log_2(W) \rceil = 1$ | In case that P is at the last symbol, 0 indicates that beam ID=0 is adopted; and 1 indicates that beam ID=1 is adopted. In case that P is not at the last symbol, 0 indicates that beams adopted by the first second time segment and the second time segment are 0 and 1 respectively; and 0 indicates that beams adopted by the first second time segment and the second time segment are 1 and 0 respectively. |

Optionally, after receiving the first signaling transmitted from the base station, the NCR mobile termination (MT) (function) can determine the first configuration (time segment information and the corresponding beam information) in the first time segment W.

Optionally, after receiving the first signaling, the terminal can perform the following steps.

Step A: the first signaling (the first configuration in the first time segment W, i.e., the time segment information and the corresponding beam information) is parsed.

Step B: the beam information corresponding to each time segment information is determined based on the time segment information.

In case that the "time segment information" indicates one second time segment (the dividing point P is at the last symbol): if the beam information is "0", the beam information of the second time segment is beam ID=0; and otherwise (that is, the beam information is "1",), the beam information of the second time segment is beam ID=1.

In case that the "time segment information" indicates two second time segments (the dividing point P is not at the last symbol): if the beam information is "0", the beam information of the first second time segment and the second second time segment are: beam ID=0 and 1 respectively; and otherwise (the beam information is "1") the beam information of the first second time segment and the second second time segment are respectively: beam ID=1 and 0.

Optionally, a corresponding relationship may exist between the time segment information and the corresponding beam information, or a direct relationship may not exist. For example: if the beam information is "0", the beam information of the time segment is beam ID=1; and if the beam information is "1", the beam information of the time segment is beam ID=0.

Optionally, beam ID=0 or 1 may refer to the number corresponding to the beam, or may be information of the beam configuration associated with a specific beam configured by the base station (such as: 0 indicates the first beam information configured by the base station, and 1 indicates the second beam information configured by the base station).

In an embodiment, it is assumed that the DCI indicates the first time segment W (such as fourteen symbols of one slot, W=14) and the maximum quantity of segments M (such as M=3), the quantity of bits (segment_time_bits) is used for indicating the duration of each second time segment, and the quantity of bits occupied by each beam ID beam_bits (such as one bit).

The time segment information and the corresponding beam information may be jointly indicated by the following means.

(1) In the first time segment W, in the M second time segments (such as M=3), if the beam indication information of the M segments (such as M=3) is the same, the base station may indicate the M second time segments as one second time segment. The second time segment starts with symbol 0 and has a length of L.

(2) In the first time segment W, in the M second time segments (such as M=3), if the beam indication information of two consecutive time segments is the same, the base station may indicate the M second time segments as M second time segments, and the M times segment having the same beam are one second time segment.

Optionally, the base station may indicate the first configuration of the first time segment W to the NCR, and M pieces of time segment information and the corresponding beam information are jointly indicated. A quantity of one or more second time segments in the duration L (whose maximum is M segments, and actually may be one segment, two segments, ..., M segments) and the beam of each second time segment may be indicated through one information segment.

For example, M=3, beam_bits=1 (indicating two beams), and L=14.

A type of information combination of the joint indication may be determined, that is, the required bit quantity segment_time_bits may be indicated.

In case that beam ID-1=beam ID-2=beam ID-3=0, there is only one combination of time segment information and corresponding beam information (only one second time segment, start point S=0, and length=14). In case that beam ID-1=beam ID-2=1=beam ID-3=1, there is only one combination of time segment information and corresponding beam information (only one second time segment, start point S=0, and length=14).

In case that beam ID-1=beam ID-2=0, beam ID-3=1, there are only W-1=13 combinations of time segment information and the corresponding beam information (a combination of two second time segments). In case that beam ID-1=beam ID-2=1, beam ID-3=0, there are only W-1=13 combinations of time segment information and the corresponding beam information (a combination of two second time segments). In case that beam ID-1=1, beam ID-2=beam ID-3=0, there are only W-1=13 combinations of time segment information and the corresponding beam information (a combination of two second time segments). In case that beam ID-1=0, beam ID-2=beam ID-3=1, there are only W-1=13 combinations of time segment information and the corresponding beam information (a combination of two second time segments).

In case that beam ID-3=0, there are (W - 1) * (W - 2)/2 combinations of time segmentation information and the corresponding beam information (a combination of three second time segments). In case that beam ID-1=1, beam ID-2=0, beam ID-3=1, there are (W - 1) * (W - 2)/2 combinations of time segmentation information and the corresponding beam information (a combination of three second time segments).

A total quantity of combinations is: $2 * (W - 1) * \frac{W-2}{2} + 4 * (W - 1) + 2 = W * (W + 1)$.

The quantity of bits required for the joint information indication being segment_time_bits is:

$\lceil \log_2 \ (W * (W + 1)) \rceil$. In case that W=14, segment_time_bits=8, that is, the quantity of bits indicated by the joint information is segment_time_bits=8.

Compared with the method of indicating the second time segment and beam information separately, a two-bit gain may be obtained (for example, in the same scenario, a separate indication method requires $3 + \lceil \log_2 \ ( \ (W - 1) \ * (W - 2)/2) \rceil = 10)$.

Optionally, the second time segment and beam information are indicated through the joint indication method, and the quantity of information bits required being segment_time_bits is: $\lceil \log_2 \ (W * (W + 1)) \rceil$. In case that W=14, segment_time_bits=8.

Using segment_time_bits for joint indication may be as shown in Table 10.

Table 10 M=3, each time segment indicates up to two beams

| Number | Information domain | Information length | Note |
|---|---|---|---|
| 1 | Time segment information | $\lceil \log_2 \ (W * (W + 1)/2) \rceil = 7$ | Indicate second time segment information, and determine the quantity of the second time segment based on the start location and the end location of the second second time segment (refers to the following note 1). |
| 2 | Beam information | $\lceil \log_2(W * (W + 1)) \rceil$ $- \left\lceil \log_2 \left( W * \frac{(W + 1)}{2} \right) \right\rceil$ $= 1$ | Determine the beam information for each second time segment based on the beam information (refers to the following note 2). |

Note 1: time segment information indicates the second time segment information, and the quantity of the second time segments is determined based on the start location and the end location of the second second time segment as follows. If the start is 0 symbol and the end is the last symbol, it indicates that there is only one second time segment (second time segment 1); if the start is 0 symbol, or the end is the last symbol, it indicates that there are only two second time segments (second time segment 1, second time segment 2); and if the start symbol is greater than 0 symbol, and the end symbol is not the last symbol, it indicates that there are three second time segments (second time segment 1, second time segment 2, second time segment 3).

Note 2: the beam information for each second time segment is determined based on the beam information as follows. If: it is determined that there is only one second time segment (second time segment 1), if beam information='0', it indicates that the beam ID of second time segment 1 is 0; otherwise it indicates that beam ID=1. If it is determined that there are only two second time segments (second time segment 1, second time segment 2), if beam information='0', it indicates that the beam ID of second time segment 1 is 0, and the beam ID of second time segment 2 is 1; otherwise (beam information='1') it indicates that the beam ID of the second time segment 1 is 1, and the beam ID of the second time segment 2 is 0. If: it is determined that there are only three second time segments (second time segment 1, second time segment 2, second time segment 3), if beam information='0', it indicates that the beam ID of the second time segment 1 is 0, the beam ID of the second time segment 2 is 1, and the beam ID of the second time segment 3 is 0; otherwise (beam information='1') it indicates that the beam ID of the second time segment 1 is 1, the beam ID of the second time segment 2 is 0, and the beam ID of the second time segment 3 is ID=1.

Optionally, after receiving the first signaling from the base station, the terminal can determine the first configuration (time segment information and corresponding beam information) within the first time segment W.

Optionally, the terminal can perform the following steps based on the first signaling.

(1) The first signaling is parsed.

(2) The quantity of the second time segments and the time information of each second time segment is determined based on the time segment information. Optionally, the start is 0 symbol and the end is the last symbol, it indicates that there is only one second time segment (second time segment 1). Optionally, the start is 0 symbol or the end symbol is the last symbol, it indicates that there are only two second time segments (second time segment 1, second time segment 2). Optionally, the start symbol is greater than the 0 symbol and the end symbol is not the last symbol, it indicates that there are only three second time segments (second time segment 1, second time segment 2, second time segment 3).

(3) The beam information of each second time segment is determined based on the time segment information and the beam information respectively corresponding to each second time segment as follows. Optionally, it is determined that there is only one second time segment (second time segment 1), if the beam information='0', it indicates that the beam ID of segment 1=0; otherwise, it indicates that the beam ID of segment 1=0; ID=1. Optionally, it is determined that there are only two second time segments (second time segment 1, second time segment 2), if beam information='0', it indicates that the beam ID of second time segment 1 is 0, and the beam ID of second time segment 2 is 1; otherwise (beam information='1') it indicates that the beam ID of second time segment 1 is 1, and the beam ID of second time segment 2 is 0.

If: it is determined that there are only three second time segments (second time segment 1, second time segment 2, second time segment 3), if beam information='0', it indicates that the beam ID of second time segment 1 is 0, the beam ID of second time segment 2 is 1, and the beam ID of second time segment 3 is 0; otherwise (beam information='1') it indicates that the beam ID of second time segment 1 is 1, the beam ID of second time segment 2 is 0, and the beam ID of second time segment 3 is 1.

Optionally, a corresponding relationship may exist between the time segment information and the corresponding beam information, or a direct relationship may not exist. For example: if the beam information is "0", the beam information of the second time segment is beam ID=1; otherwise (beam information is "1") the beam information of the second time segment is beam ID=0.

Optionally, beam ID=0 or 1 may refer to the number corresponding to the beam, or may be information of the beam configuration associated with a specific beam configured by the base station (such as: 0 indicates the beam information of the first configuration configured by the base station, and 1 indicates the beam information of the second configuration configured by the base station).

Optionally, according to the method for configuration information indication of an embodiment of the present application, determining, based on the first configuration, time segment information of one or more second time segments included in the first time segment, and configuration information respectively corresponding to each second time segment in the one or more second time segments includes: in case that an overlapping time unit exists between a third time segment and the one or more second time segments, determining that time units included in the one or more second time segments skip the overlapping time unit, or, determining configuration information corresponding to the overlapping time unit based on a priority of configuration information corresponding to the third time segment and a priority of configuration information corresponding to the one or more second time segments.

Optionally, determining configuration information corresponding to the overlapping time unit based on a priority of configuration information corresponding to the third time segment and a priority of configuration information corresponding to the one or more second time segments includes:

in case that the priority of the configuration information corresponding to the third time segment is higher than the priority of the configuration information corresponding to the one or more second time segments, determining the configuration information corresponding to the overlapping time unit based on the configuration information corresponding to the third time segment; or

in case that the priority of the configuration information corresponding to the third time segment is lower than the priority of the configuration information corresponding to the one or more second time segments, determining the configuration information corresponding to the overlapping time unit based on the configuration information corresponding to the one or more second time segments.

In addition to the dynamic indication described in the solutions, the base station can also configure the beam information within a certain time in a semi-static way.

When the information of the dynamic beam indication indicated by the base station overlaps and repeats with the time of the semi-static configuration, one of the following two methods may be used for processing.

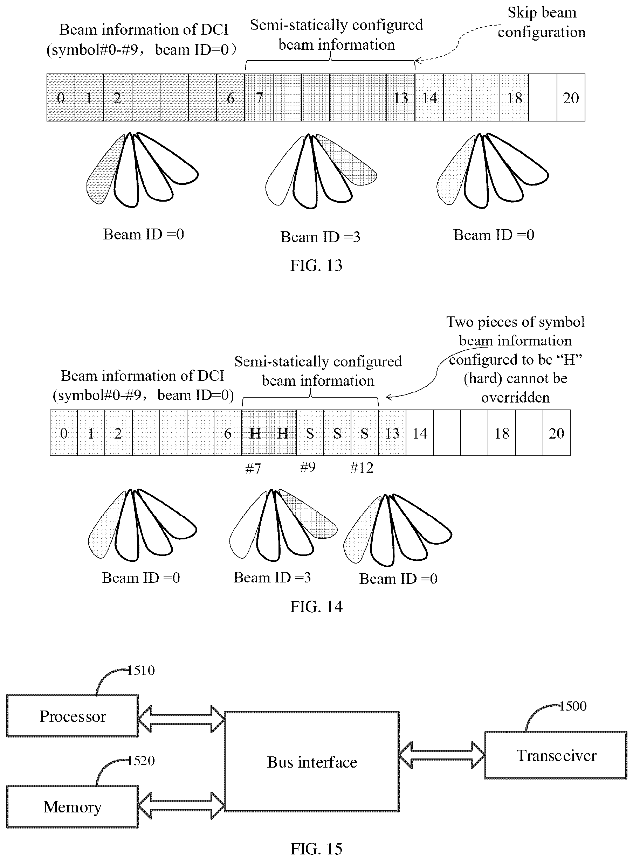

FIG. 13 is a third schematic diagram of a first configuration according to an embodiment of the present application. As shown in FIG. 13, when the NCR receives the dynamic signaling indication, it skips a semi-statically configured symbol. It is assumed that the base station semi-statically configures the corresponding beam information (such as beam ID=3) for the symbols #7-#13. The base station indicates the beam information to the NCR through dynamic signaling (time segment is #0--#9, beam ID=0). Since #7-#9 and the semi-static configuration overlap in the time domain, the NCR skips symbols #7-#13 and sets beam ID=3 at #14-#18.

Optionally, when the NCR receives the dynamic signaling (first signaling) indication, the beam information of the overlapping symbols can be determined based on a priority relationship between the dynamic indication and the semi-static configuration.

If a priority of the corresponding dynamic indication is higher than a priority of the semi-static configuration, the overlapping symbols use the beam information of the dynamic indication; conversely, if the priority of the dynamic indication is lower than the priority of the semi-static configuration, the overlapping symbols use the beam information of the semi-static indication.

For example, a priority attribute of the configured symbol may be indicated during semi-static configuration. For example, when configured as a "hard" attribute, it indicates that it cannot be overridden by the dynamic signaling (i.e., the priority of the semi-static configuration is higher than the priority of the dynamic indication); and when configured as a "soft" attribute, it indicates that it may be overridden by the dynamic signaling (i.e., the priority of the semi-static configuration is lower than the priority of the dynamic indication).

FIG. 14 is a fourth schematic diagram of a first configuration according to an embodiment of the present application. As shown in FIG. 14, it is assumed that the base station semi-statically configures the corresponding beam information (such as beam ID=3) for the symbols #7-#12, where #7/#8 is configured as "H" (hard, hard attribute, indicating that it cannot be modified or overridden through dynamic indication), and #9/#10/#11/#12 is configured as "S" (soft, soft attribute, indicating that it may be modified or overridden through dynamic indication).

The base station indicates the beam information to the NCR through the dynamic signaling (time segment is #0-#3, beam ID=0). Since #7-#12 and the semi-static configuration overlap in the time domain, based on the priority attribute of the semi-static configuration, the beam information indicated by the dynamic signaling does not override the configuration information of #7/#8, that is, the configuration of beam ID=2 is still maintained; and #9/#10/#11/#12 are overridden by the beam information indicated by the dynamic signaling, that is, beam ID=0.

In the method for configuration information indication provided by the embodiment of the present application, by dividing the first time segment into multiple time segments, configuring a beam direction for each second time segment, and indicating the first signaling to the NCR mobile termination, the time segment information of one or more second time segments included in the first time segment, and the configuration information respectively corresponding to each second time segment among the one or more second time segments is indicated to the terminal. Dynamic and flexible time segment indication is adopted for the first time segment, which avoids the NCR to detect scheduling information of all terminals, reduces capability requirements for the NCR, and facilitates network deployment.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

FIG. 15 is a schematic structural diagram of a base station according to an embodiment of the present application. As shown in FIG. 15, the base station includes a memory 1520, a transceiver 1500 and a processor 1510, where the memory 1520 is used for storing a computer program, the transceiver 1500 is used for receiving and transmitting data under control of the processor 1510, and the processor 1510 is used for reading the computer program in the memory 1520 and performing the following operations:

generating first signaling, where the first signaling is used to indicate a first configuration corresponding to a first time segment, the first configuration is used to indicate time segment information of one or more second time segments within the first time segment, and configuration information respectively corresponding to each second time segment among the one or more second time segments; and transmitting the first signaling.

Specifically, the transceiver 1500 is used to receive and transmit data under control of the processor 1510.

In FIG. 15, a bus architecture may include any number of interconnected buses and bridges, which are linked together through various circuits of one or more processors represented by the processor 1510 and one or more memories represented by the memory 1520. The bus architecture may also link together various other circuits, such as peripherals, voltage regulators, and power management circuits, etc., which are well known in the art, and therefore are not further described in the present application. A bus interface provides an interface. The transceiver 1500 may include multiple elements, i.e., including a transmitter and a receiver, units for providing communication with various other devices over transmission media including wireless channels, wired channels, fiber optic cables, and the like. The processor 1510 is responsible for managing the bus architecture and general processing, and the memory 1520 may store data used by the processor 1510 when performing operations.

The processor 1510 may be a central processing unit (CPU), an application specific integrated circuit (ASIC), a field programmable gate array (FPGA) or a complex programmable logic device (CPLD), and the processor may also adopt a multi-core architecture.

Optionally, the first configuration is used to indicate time segment information of one or more second time segments within the first time segment, and the configuration information respectively corresponding to each second time segment among the one or more second time segments, includes:

the first configuration is used to, in case that an overlapping time unit exists between a third time segment and the one or more second time segments, indicate time units included in the one or more second time segments to skip the overlapping time unit, or, indicate configuration information corresponding to the overlapping time unit based on a priority of configuration information corresponding to the third time segment and a priority of configuration information corresponding to the one or more second time segments,

where the configuration information of the third time segment is configured by a semi-static configuration way.

Optionally, the configuration information includes beam information.

Optionally, the first signaling includes a first index corresponding to the first time segment, the first index is used to indicate a first configuration corresponding to the first index in a time domain resource allocation (TDRA) table, where the first index is one of one or more indexes included in the TDRA table, each index in the TDRA table corresponds to a type of configuration, and different indexes correspond to different configurations.

Optionally, in case that the first signaling is used to indicate first configurations respectively corresponding to multiple first time segments, first indexes respectively corresponding to each first time segment among the multiple first time segments are partially the same, completely the same, or completely different.

Optionally, the first signaling includes first information and/or second information, where: the first information is used to indicate one or more second time segment information; and the second information is used to indicate configuration information respectively corresponding to the one or more second time segments. Optionally, the first signaling includes one or more pieces of first information, and the first information and the second time segments are in a one-to-one correspondence.

Optionally, the first signaling includes one or more pieces of second information, and the second information and the second time segments are in a one-to-one correspondence.

Optionally, the length of the first signaling is: M*segment_time_bits + M*beam_bits, where

$$\text{segment\_time\_bits} = \lceil \log_2 \ (W * (W + 1)/2) \rceil$$, M is a quantity of the one or more second time segments, W is a length of the first time segment, and beam_bits is a length of configuration information corresponding to one second time segment.

Optionally, the first information includes: third information, where the third information includes at least one of the following:

first location information of an intermediate time unit in the first time segment, where the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or

second location information of an intermediate time segment in the first time segment, where the second location information is used to divide the first time segment into one or more second time segments, the intermediate time segment determined by the second location information is used as the second time segment, and a quantity of the intermediate time segments is one or more.

Optionally, the second location information includes at least one of the following: a start location of the intermediate time segment; an end location of the intermediate time segment; or a length of the intermediate time segment.

Optionally, the length of the first signaling is: segment_time_bits + M*beam_bits, where segment_time_bits = $F$(W, M), F() is an operation function, the operation function is associated with a length W of the first time segment and a quantity M of the one or more second time segments, the second time segment is located in the first time segment, and beam_bits is a length of configuration information corresponding to one second time segment.

Optionally, the second information includes an identifier of a first configuration information combination; the first configuration information combination is used to indicate the configuration information respectively corresponding to the one or more second time segments respectively, the first configuration information combination is a partial configuration information combination among one or more second configuration information combinations, and identifiers of the one or more second configuration information combinations are known to the base station and a terminal.

Optionally, an encoding way of the first information and the second information in the first signaling includes: a start and length indicator value (SLIV) encoding way, or a first encoding way, where the first encoding way is a preset or protocol predefined encoding way.

Optionally, the processor 1510 is used for: determining effective time of the first configuration; and transmitting fourth information to a terminal, where the fourth information is used to indicate the effective time of the first configuration, where the fourth information is included in the first signaling, or the fourth information is carried in other signaling, or the fourth information is separate signaling.

Optionally, the processor 1510 is used for: obtaining capability information of a network controlled repeater (NCR), and determining the effective time based on the capability information, where the capability information is used to indicate minimum effective time supported by the NCR.

Optionally, the time segment information includes at least two of the following: a start location, an end location, or a length, where the encoding way of at least two of the start location, the end location, or the length in the first signaling includes: a start and length indicator value (SLIV) encoding way, or a second encoding way, where the second encoding way is a preset or protocol predefined encoding way.

It should be noted that the above-mentioned network device provided by the embodiments of the present application can implement all the method steps in the above-mentioned method embodiments performed by the network device and may achieve the same effect. The parts and beneficial effects of this embodiment that are the same as those of the method embodiments are not described in detail.

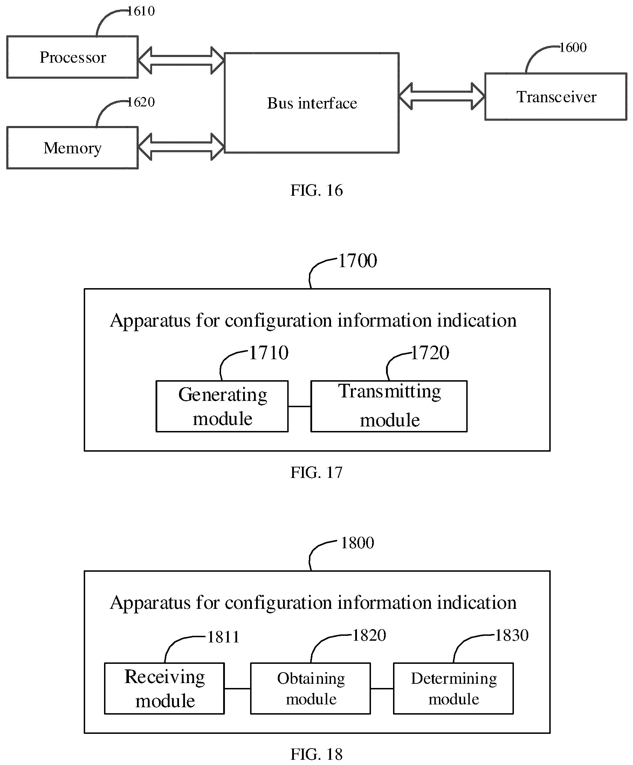

FIG. 16 is a schematic structural diagram of a terminal according to an embodiment of the present application. As shown in FIG. 16, the terminal includes a memory 1620, a transceiver 1600 and a processor 1610, where the memory 1620 is used for storing a computer program, the transceiver 1600 is used for receiving and transmitting data under control of the processor 1610, and the processor 1610 is used for reading the computer program in the memory 1620 and performing the following operations:

receiving first signaling; obtaining a first configuration corresponding to a first time segment based on the first signaling; and determining, based on the first configuration, time segment information of one or more second time segments included in the first time segment, and configuration information respectively corresponding to each second time segment among the one or more second time segments.

Specifically, the transceiver 1600 is used for receiving and transmitting data under control of the processor 1610.

In FIG. 16, a bus architecture may include any number of interconnected buses and bridges, which are linked together through various circuits of one or more processors represented by the processor 1610 and one or more memories represented by the memory 1620. The bus architecture may also link together various other circuits, such as peripherals, voltage regulators, and power management circuits, etc., which are well known in the art, and therefore are not further described in the present application. A bus interface provides an interface. The transceiver 1600 may include multiple elements, i.e., including a transmitter and a receiver, units for providing communication with various other devices over transmission media including wireless channels, wired channels, fiber optic cables, and the like. For different user devices, a user interface 1630 may be an interface capable of externally or internally connecting required devices, and the connected devices include but are not limited to a small keypad, a display, a speaker, a microphone, a joystick, and the like.

The processor 1610 is responsible for managing the bus architecture and general processing, and the memory 1620 may store data used by the processor 1610 when performing operations.

In an embodiment, the processor 1610 may be a central processing unit (CPU), an application specific integrated circuit (ASIC), a field programmable gate array (FPGA), or a complex programmable logic device (CPLD), and the processor may also adopt a multi-core architecture.

The processor calls a computer program stored in the memory to perform any of the methods provided by the embodiments of the present application based on an obtained executable instruction. The processor and the memory can also be arranged physically separately.

The configuration information includes beam information.

Optionally, the first signaling includes a first index corresponding to the first time segment, the first index is used to indicate a first configuration corresponding to the first index in a time domain resource allocation (TDRA) table, where the first index is one of one or more indexes included in the TDRA table, each index in the TDRA table corresponds to a type of configuration, and different indexes correspond to different configurations.

Optionally, in case that the first signaling is used to indicate first configurations respectively corresponding to multiple first time segments, first indexes respectively corresponding to each first time segment among the multiple first time segments are partially the same, completely the same, or completely different.

Optionally, the first signaling includes first information and/or second information, where: the first information is used to indicate one or more second time segment information; and the second information is used to indicate configuration information respectively corresponding to the one or more second time segments.

Optionally, the first signaling includes one or more pieces of first information, and the first information and the second time segments are in a one-to-one correspondence. Optionally, the first signaling includes one or more pieces of second information, and the second information and the second time segments are in a one-to-one correspondence.

Optionally, the length of the first signaling is: M*segment_time_bits + M*beam_bits, where

$$segment\_time\_bits = \lceil \log_2 \ (W * (W + 1)/2) \rceil$$, M is a quantity of the one or more second time segments, W is a length of the first time segment, and beam_bits is a length of configuration information corresponding to one second time segment.

Optionally, the first information includes: third information, where the third information includes at least one of the following:

first location information of an intermediate time unit in the first time segment, where the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or

second location information of an intermediate time segment in the first time segment, where the second location information is used to divide the first time segment into one or more second time segments, the intermediate time segment determined by the second location information is used as the second time segment, and a quantity of the intermediate time segments is one or more.

Optionally, the second location information includes at least one of the following: a start location of the intermediate time segment; an end location of the intermediate time segment; or a length of the intermediate time segment.

Optionally, the length of the first signaling is: segment_time_bits + M*beam_bits, where segment_time_bits = *F* (W, M), F() is an operation function, the operation function is associated with a length W of the first time segment and a quantity M of the one or more second time segments, the second time segment is located in the first time segment, and beam_bits is a length of configuration information corresponding to one second time segment.

Optionally, an encoding way of the first information and the second information in the first signaling includes: a start and length indicator value (SLIV) encoding way, or a first encoding way, where the first encoding way is a preset or protocol predefined encoding way.

Optionally, the processor is further used for: in case that an overlapping time unit exists between a third time segment and the one or more second time segments, determining that time units included in the one or more second time segments skip the overlapping time unit, or, determining configuration information corresponding to the overlapping time unit based on a priority of configuration information corresponding to the third time segment and a priority of configuration information corresponding to the one or more second time segments, where the configuration information of the third time segment is configured by a semi-static configuration manner.

Optionally, the processor is further used for: in case that the priority of the configuration information corresponding to the third time segment is higher than the priority of the configuration information corresponding to the one or more second time segments, determining the configuration information corresponding to the overlapping time unit based on the configuration information corresponding to the third time segment; or in case that the priority of the configuration information corresponding to the third time segment is lower than the priority of the configuration information corresponding to the one or more second time segments, determining the configuration information corresponding to the overlapping time unit based on the configuration information corresponding to the one or more second time segments.

Optionally, the processor is further used for: receiving fourth information, where the fourth information is used to indicate effective time of the first configuration, where the fourth information is included in the first signaling, or the fourth information is carried in other signaling, or the fourth information is separate signaling.

It should be noted that the above-mentioned terminal provided by the embodiment of the present application can implement all the method steps in the above-mentioned method embodiments performed by the terminal and may achieve the same effect. The parts and beneficial effects of this embodiment that are the same as those of the method embodiments are not described in detail.

FIG. 17 is a first schematic structural diagram of an apparatus for configuration information indication according to an embodiment of the present application. As shown in FIG. 17, the apparatus 1700 includes: a generating module 1710 and a transmitting module 1720.

The generating module 1710 is used for generating first signaling, where the first signaling is used to indicate a first configuration corresponding to a first time segment, the first configuration is used to indicate time segment information of one or more second time segments within the first time segment, and configuration information respectively corresponding to each second time segment among the one or more second time segments.

The transmitting module 1720 is used for transmitting the first signaling.

Optionally, the first configuration is used to indicate time segment information of one or more second time segments within the first time segment, and the configuration information respectively corresponding to each second time segment among the one or more second time segments, includes: the first configuration is used to, in case that an overlapping time unit exists between a third time segment and the one or more second time segments, indicate time units included in the one or more second time segments to skip the overlapping time unit, or, indicate configuration information corresponding to the overlapping time unit based on a priority of configuration information corresponding to the third time segment and a priority of configuration information corresponding to the one or more second time segments, where the configuration information of the third time segment is configured by a semi-static configuration way.

Optionally, the configuration information includes beam information.

Optionally, the first signaling includes a first index corresponding to the first time segment, the first index is used to indicate a first configuration corresponding to the first index in a time domain resource allocation (TDRA) table, where the first index is one of one or more indexes included in the TDRA table, each index in the TDRA table corresponds to a type of configuration, and different indexes correspond to different configurations.

Optionally, in case that the first signaling is used to indicate first configurations respectively corresponding to multiple first time segments, first indexes respectively corresponding to each first time segment among the multiple first time segments are partially the same, completely the same, or completely different.

Optionally, the first signaling includes first information and/or second information, where: the first information is used to indicate one or more second time segment information; and the second information is used to indicate configuration information respectively corresponding to the one or more second time segments.

Optionally, the first signaling includes one or more pieces of first information, and the first information and the second time segments are in a one-to-one correspondence. Optionally, the first signaling includes one or more pieces of second information, and the second information and the second time segments are in a one-to-one correspondence.

Optionally, the length of the first signaling is: M*segment_time_bits + M*beam_bits, where

$$\text{segment\_time\_bits} = \lceil \log_2 (W * (W + 1)/2) \rceil$$, M is a quantity of the one or more second time segments, W is a length of the first time segment, and beam_bits is a length of configuration information corresponding to one second time segment.

Optionally, the first information includes: third information, where the third information includes at least one of the following:

first location information of an intermediate time unit in the first time segment, where the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or

second location information of an intermediate time segment in the first time segment, where the second location information is used to divide the first time segment into one or more second time segments, the intermediate time segment determined by the second location information is used as the second time segment, and a quantity of the intermediate time segments is one or more.

Optionally, the second location information includes at least one of the following: a start location of the intermediate time segment; an end location of the intermediate time segment; or a length of the intermediate time segment.

Optionally, the length of the first signaling is: segment_time_bits + M*beam_bits, where segment_time_bits = *F* (W, M), F() is an operation function, the operation function is associated with a length W of the first time segment and a quantity M of the one or more second time segments, the second time segment is located in the first time segment, and beam_bits is a length of configuration information corresponding to one second time segment.

Optionally, the second information includes an identifier of a first configuration information combination; the first configuration information combination is used to indicate the configuration information respectively corresponding to the one or more second time segments respectively, the first configuration information combination is a partial configuration information combination among one or more second configuration information combinations, and identifiers of the one or more second configuration information combinations are known to the base station and a terminal.

Optionally, an encoding way of the first information and the second information in the first signaling includes: a start and length indicator value (SLIV) encoding way, or a first encoding way, where the first encoding way is a preset or protocol predefined encoding way.

Optionally, the apparatus further includes: an effective time determining module, used for determining effective time of the first configuration; and a first information transmitting module, used for transmitting fourth information to a terminal, where the fourth information is used to indicate the effective time of the first configuration; the fourth information is included in the first signaling, or the fourth information is carried in other signaling, or the fourth information is separate signaling.

Optionally, the effective time determining module is used for: obtaining capability information of a network controlled repeater (NCR), and determining the effective time based on the capability information, where the capability information is used to indicate minimum effective time supported by the NCR.

Optionally, the time segment information includes at least two of the following: a start location, an end location, or a length, where the encoding way of at least two of the start location, the end location, or the length in the first signaling includes: a start and length indicator value (SLIV) encoding way, or a second encoding way, where the second encoding way is a preset or protocol predefined encoding way.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted that the apparatus for configuration information indication provided by the embodiments of the present application can implement all the method steps in the above-mentioned method embodiments and may achieve the same effect. The parts and beneficial effects of this embodiment that are the same as those of the method embodiments are not described in detail.

FIG. 18 is a second schematic structural diagram of an apparatus for configuration information indication according to an embodiment of the present application. As shown in FIG. 18, the apparatus 1800 includes: a receiving module 1810, an obtaining module 1820 and a determining module 1830.

The receiving module 1810 is used for receiving first signaling.

The obtaining module 1820 is used for obtaining a first configuration corresponding to a first time segment based on the first signaling.

The determining module 1830 is used for determining, based on the first configuration, time segment information of one or more second time segments included in the first time segment, and configuration information respectively corresponding to each second time segment among the one or more second time segments.

The configuration information includes beam information.

Optionally, the first signaling includes a first index corresponding to the first time segment, the first index is used to indicate a first configuration corresponding to the first index in a time domain resource allocation (TDRA) table, where the first index is one of one or more indexes included in the TDRA table, each index in the TDRA table corresponds to a type of configuration, and different indexes correspond to different configurations.

Optionally, in case that the first signaling is used to indicate first configurations respectively corresponding to multiple first time segments, first indexes respectively corresponding to each first time segment among the multiple first time segments are partially the same, completely the same, or completely different.

Optionally, the first signaling includes first information and/or second information, where: the first information is used to indicate one or more second time segment information; and the second information is used to indicate configuration information respectively corresponding to the one or more second time segments.

Optionally, the first signaling includes one or more pieces of first information, and the first information and the second time segments are in a one-to-one correspondence. Optionally, the first signaling includes one or more pieces of second information, and the second information and the second time segments are in a one-to-one correspondence.

Optionally, the length of the first signaling is: M*segment_time_bits + M*beam_bits, where

$$segment\_time\_bits = \lceil \log_2 （W * (W + 1)/2) \rceil$$, M is a quantity of the one or more second time segments, W is a length of the first time segment, and beam_bits is a length of configuration information corresponding to one second time segment.

Optionally, the first information includes: third information, where the third information includes at least one of the following:

first location information of an intermediate time unit in the first time segment, where the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or

second location information of an intermediate time segment in the first time segment, where the second location information is used to divide the first time segment into one or more second time segments, the intermediate time segment determined by the second location information is used as the second time segment, and a quantity of the intermediate time segments is one or more.

Optionally, the second location information includes at least one of the following: a start location of the intermediate time segment; an end location of the intermediate time segment; or a length of the intermediate time segment.

Optionally, the length of the first signaling is: segment_time_bits + M*beam_bits, where segment_time_bits = *F* (W, M), F() is an operation function, the operation function is associated with a length W of the first time segment and a quantity M of the one or more second time segments, the second time segment is located in the first time segment, and beam_bits is a length of configuration information corresponding to one second time segment.

Optionally, an encoding way of the first information and the second information in the first signaling includes: a start and length indicator value (SLIV) encoding way, or a first encoding way,

where the first encoding way is a preset or protocol predefined encoding way.

Optionally, the determining module is used for: in case that an overlapping time unit exists between a third time segment and the one or more second time segments, determining that time units included in the one or more second time segments skip the overlapping time unit, or, determining configuration information corresponding to the overlapping time unit based on a priority of configuration information corresponding to the third time segment and a priority of configuration information corresponding to the one or more second time segments, where the configuration information of the third time segment is configured by a semi-static configuration manner.

Optionally, the determining module is used for: in case that the priority of the configuration information corresponding to the third time segment is higher than the priority of the configuration information corresponding to the one or more second time segments, determining the configuration information corresponding to the overlapping time unit based on the configuration information corresponding to the third time segment; or in case that the priority of the configuration information corresponding to the third time segment is lower than the priority of the configuration information corresponding to the one or more second time segments, determining the configuration information corresponding to the overlapping time unit based on the configuration information corresponding to the one or more second time segments.

Optionally, the apparatus further includes:

a receiving module, used for receiving fourth information, where the fourth information is used to indicate effective time of the first configuration,

where the fourth information is included in the first signaling, or the fourth information is carried in other signaling, or the fourth information is separate signaling.

It should be noted that the division of units in the embodiments of the present application is schematic, which is only a logical function division, and there may be other division methods in actual implementation. In addition, each functional unit in each embodiment of the present application may be integrated into a processing unit, or each unit can exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it may be stored in a processor-readable storage medium. Based on this understanding, the technical solution of the present application is essentially or part of the contribution to the related art or all or part of the technical solution may be embodied in the form of a software product. The computer software product is stored in a storage medium, including several instructions to enable a computer device (which may be a personal computer, server, or network device, etc.) or a processor to perform all or part of the steps of the method described in each embodiment of the present application. The aforementioned storage medium includes: U disk, mobile hard disk, read-only memory (ROM), random access memory (RAM), disk or optical disk, etc. Various media that can store program codes.

It should be noted that the apparatus for configuration information indication provided by the embodiments of the present application can implement all the method steps in the above-mentioned method embodiments and may achieve the same effect. The parts and beneficial effects of this embodiment that are the same as those of the method embodiments are not described in detail.

An embodiment of the present application further provides a processor-readable storage medium, where the processor-readable storage medium stores a computer program, and the computer program is used to cause a processor to perform the methods provided by the above embodiments.

The processor-readable storage medium may be any available medium or data storage device that may be accessed by the processor, including but not limited to, a magnetic storage (such as a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, a system, or a computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram. These processor-executable instructions may also be loaded onto a computer or other programmable data processing device to cause a series of operational steps to be performed on the computer or other programmable device to produce a computer-implemented procedure and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for configuration information indication, performed by a base station, comprising:

generating first signaling, wherein the first signaling is used to indicate a first configuration corresponding to a first time segment, the first configuration is used to indicate time segment information of one or more second time segments within the first time segment, and configuration information respectively corresponding to each second time segment among the one or more second time segments; and

transmitting the first signaling.

2. The method of claim 1, wherein the configuration information comprises beam information.

3. The method of claim 1 or 2, wherein the first signaling comprises a first index corresponding to the first time segment, and the first index is used to indicate a first configuration corresponding to the first index in a time domain resource allocation, TDRA, table,
wherein the first index is one of one or more indexes comprised in the TDRA table, each index in the TDRA table corresponds to a type of configuration, and different indexes correspond to different configurations.

4. The method of claim 3, wherein in case that the first signaling is used to indicate first configurations respectively corresponding to multiple first time segments, first indexes respectively corresponding to each first time segment among the multiple first time segments are partially the same, completely the same, or completely different.

5. The method of claim 1 or 2, wherein the first signaling comprises first information and/or second information, wherein

the first information is used to indicate one or more second time segment information; and
the second information is used to indicate configuration information respectively corresponding to the one or more second time segments.

6. The method of claim 5, wherein the first signaling comprises one or more pieces of first information, and the first information and the second time segments are in a one-to-one correspondence.

7. The method of claim 5, wherein the first signaling comprises one or more pieces of second information, and the second information and the second time segments are in a one-to-one correspondence.

8. The method of claim 7, wherein a length of the first signaling is: M*segment_time_bits + M*beam_bits, wherein
$$\text{segment\_time\_bits} = \lceil \log_2 \ (\text{W} * (\text{W} + 1)/2) \rceil$$, M is a quantity of the one or more second time segments, W is a length of the first time segment, and beam_bits is a length of configuration information corresponding to one second time segment.

9. The method of claim 5, wherein the first information comprises:
third information, wherein the third information comprises at least one of the following:

first location information of an intermediate time unit in the first time segment, wherein the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or
second location information of an intermediate time segment in the first time segment, wherein the second location information is used to divide the first time segment into one or more second time segments, the intermediate time segment determined by the second location information is used as the second time segment, and a quantity of the intermediate time segments is one or more.

10. The method of claim 9, wherein the second location information comprises at least one of the following:

a start location of the intermediate time segment;
an end location of the intermediate time segment; or
a length of the intermediate time segment.

11. The method of claim 9 or 10, wherein a length of the first signaling is: segment_time_bits + M*beam_bits, wherein segment_time_bits = F (W,M), F() is an operation function, the operation function is associated with a length W of the first time segment and a quantity M of the one or more second time segments, the second time segment is located in the first time segment, and beam_bits is a length of configuration information corresponding to one second time segment.

12. The method of claim 9 or 10, wherein the second information comprises an identifier of a first configuration information combination;

the first configuration information combination is used to indicate the configuration information respectively corresponding to the one or more second time segments respectively,
the first configuration information combination is a partial configuration information combination among one or more second configuration information combinations, and identifiers of the one or more second configuration information combinations are known to the base station and a terminal.

13. The method of any one of claims 5 to 12, wherein an encoding way of the first information and the second information in the first signaling comprises: a start and length indicator value, SLIV, encoding way, or a first encoding way, wherein the first encoding way is a preset or protocol predefined encoding way.

14. The method of any one of claims 1 to 13, further comprising:

determining effective time of the first configuration; and
transmitting fourth information to a terminal, wherein the fourth information is used to indicate the effective time of the first configuration,
wherein the fourth information is comprised in the first signaling, or the fourth information is carried in other signaling, or the fourth information is separate signaling.

15. The method of claim 14, wherein determining the effective time of the first configuration comprises:
obtaining capability information of a network controlled repeater, NCR, and determining the effective time based on the capability information, wherein the capability information is used to indicate minimum effective time supported by the NCR.

16. The method of any one of claims 1 to 15, wherein the time segment information comprises at least two of the following:

a start location, an end location, or a length,
wherein the encoding way of at least two of the start location, the end location, or the length in the first signaling comprises: a start and length indicator value, SLIV, encoding way, or a second encoding way,
wherein the second encoding way is a preset or protocol predefined encoding way.

17. The method of any one of claims 1 to 16, wherein the first configuration is used to indicate time segment information of one or more second time segments within the first time segment, and the configuration information respectively corresponding to each second time segment among the one or more second time segments, comprises:

the first configuration is used to, in case that an overlapping time unit exists between a third time segment and the one or more second time segments, indicate time units comprised in the one or more second time segments to skip the overlapping time unit, or, indicate configuration information corresponding to the overlapping time unit based on a priority of configuration information corresponding to the third time segment and a priority of configuration information corresponding to the one or more second time segments,
wherein the configuration information of the third time segment is configured by a semi-static configuration way.

18. A method for configuration information indication, performed by a terminal, comprising:

receiving first signaling;
obtaining a first configuration corresponding to a first time segment based on the first signaling; and
determining, based on the first configuration, time segment information of one or more second time segments comprised in the first time segment, and configuration information respectively corresponding to each second time segment among the one or more second time segments.

19. The method of claim 18, wherein the configuration information comprises beam information.

20. The method of claim 18 or 19, wherein the first signaling comprises a first index corresponding to the first time segment, and the first index is used to indicate a first configuration corresponding to the first index in a time domain resource allocation, TDRA, table,
wherein the first index is one of one or more indexes comprised in the TDRA table, each index in the TDRA table corresponds to a type of configuration, and different indexes correspond to different configurations.

21. The method of claim 20, wherein in case that the first signaling is used to indicate first configurations respectively corresponding to multiple first time segments, first indexes respectively corresponding to each first time segment among the multiple first time segments are partially the same, completely the same, or completely different.

22. The method of claim 18 or 19, wherein the first signaling comprises first information and/or second information, wherein

the first information is used to indicate one or more second time segment information; and
the second information is used to indicate configuration information respectively corresponding to the one or more second time segments.

23. The method of claim 22, wherein the first signaling comprises one or more pieces of first information, and the first information and the second time segments are in a one-to-one correspondence.

24. The method of claim 22, wherein the first signaling comprises one or more pieces of second information, and the second information and the second time segments are in a one-to-one correspondence.

25. The method of claim 24, wherein a length of the first signaling is: M*segment_time_bits + M*beam_bits, wherein
$$\text{segment\_time\_bits} = \lceil \log_2 \left( W * (W+1)/2 \right) \rceil$$, M is a quantity of the one or more second time segments, W is a length of the first time segment, and beam_bits is a length of configuration information corresponding to one second time segment.

26. The method of claim 22, wherein the first information comprises:
third information, wherein the third information comprises at least one of the following:

first location information of an intermediate time unit in the first time segment, wherein the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or
second location information of an intermediate time segment in the first time segment, wherein the second location information is used to divide the first time segment into one or more second time segments, the intermediate time segment determined by the second location information is used as the second time segment, and a quantity of the intermediate time segments is one or more.

27. The method of claim 26, wherein the second location information comprises at least one of the following:

a start location of the intermediate time segment;
an end location of the intermediate time segment; or
a length of the intermediate time segment.

28. The method of claim 26 or 27, wherein a length of the first signaling is: segment_time_bits + M*beam_bits, wherein segment_time_bits = $F$ (W, M), F() is an operation function, the operation function is associated with a length W of the first time segment and a quantity M of the one or more second time segments, the second time segment is located in the first time segment, and beam_bits is a length of configuration information corresponding to one second time segment.

29. The method of any one of claims 18 to 28, wherein determining, based on the first configuration, time segment information of one or more second time segments comprised in the first time segment, and configuration information respectively corresponding to each second time segment among the one or more second time segments comprises:

in case that an overlapping time unit exists between a third time segment and the one or more second time segments, determining that time units comprised in the one or more second time segments skip the overlapping time unit, or, determining configuration information corresponding to the overlapping time unit based on a priority of configuration information corresponding to the third time segment and a priority of configuration information corresponding to the one or more second time segments,
wherein the configuration information of the third time segment is configured by a semi-static configuration manner.

30. The method of claim 29, wherein determining configuration information corresponding to the overlapping time unit based on the priority of configuration information corresponding to the third time segment and the priority of configuration information corresponding to the one or more second time segments comprises:

in case that the priority of the configuration information corresponding to the third time segment is higher than the priority of the configuration information corresponding to the one or more second time segments, determining the configuration information corresponding to the overlapping time unit based on the configuration information corresponding to the third time segment; or
in case that the priority of the configuration information corresponding to the third time segment is lower than the priority of the configuration information corresponding to the one or more second time segments, determining the configuration information corresponding to the overlapping time unit based on the configuration information corresponding to the one or more second time segments.

31. The method of claim 18, further comprising:

receiving fourth information, wherein the fourth information is used to indicate effective time of the first configuration,
wherein the fourth information is comprised in the first signaling, or the fourth information is carried in other signaling, or the fourth information is separate signaling.

32. A base station, comprising a memory, a transceiver and a processor,
wherein the memory is used for storing a computer program, the transceiver is used for receiving and transmitting data under control of the processor, and the processor is used for reading the computer program in the memory and performing the following operations:

generating first signaling, wherein the first signaling is used to indicate a first configuration corresponding to a first time segment, the first configuration is used to indicate time segment information of one or more second time segments within the first time segment, and configuration information respectively corresponding to each second time segment among the one or more second time segments; and
transmitting the first signaling.

33. The base station of claim 32, wherein the configuration information comprises beam information.

34. The base station of claim 32 or 33, wherein the first signaling comprises a first index corresponding to the first time segment, and the first index is used to indicate a first configuration corresponding to the first index in a time domain resource allocation, TDRA, table,
wherein the first index is one of one or more indexes comprised in the TDRA table, each index in the TDRA table corresponds to a type of configuration, and different indexes correspond to different configurations.

35. The base station of claim 34, wherein in case that the first signaling is used to indicate first configurations respectively corresponding to multiple first time segments, first indexes respectively corresponding to each first time segment among the multiple first time segments are partially the same, completely the same, or completely different.

36. The base station of claim 32 or 33, wherein the first signaling comprises first information and/or second information, wherein

the first information is used to indicate one or more second time segment information; and
the second information is used to indicate configuration information respectively corresponding to the one or more second time segments.

37. The base station of claim 36, wherein the first signaling comprises one or more pieces of first information, and the first information and the second time segments are in a one-to-one correspondence.

38. The base station of claim 36, wherein the first signaling comprises one or more pieces of second information, and the second information and the second time segments are in a one-to-one correspondence.

39. The base station of claim 38, wherein a length of the first signaling is: M*segment_time_bits + M*beam_bits, wherein

$$\text{segment\_time\_bits} = \lceil \log_2 \left( W * (W+1) / 2 \right) \rceil$$

, M is a quantity of the one or more second time segments, W is a length of the first time segment, and beam_bits is a length of configuration information corresponding to one second time segment.

40. The base station of claim 36, wherein the first information comprises:
third information, wherein the third information comprises at least one of the following:

first location information of an intermediate time unit in the first time segment, wherein the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or
second location information of an intermediate time segment in the first time segment, wherein the second location information is used to divide the first time segment into one or more second time segments, the intermediate time segment determined by the second location information is used as the second time segment, and a quantity of the intermediate time segments is one or more.

41. The base station of claim 40, wherein the second location information comprises at least one of the following:

a start location of the intermediate time segment;
an end location of the intermediate time segment; or
a length of the intermediate time segment.

42. The base station of claim 40 or 41, wherein a length of the first signaling is: segment_time_bits + M*beam_bits, wherein segment_time_bits = $F$ (W, M), F() is an operation function, the operation function is associated with a length W of the first time segment and a quantity M of the one or more second time segments, the second time segment is located in the first time segment, and beam_bits is a length of configuration information corresponding to one second time segment.

43. The base station of claim 40 or 41, wherein the second information comprises an identifier of a first configuration information combination;

the first configuration information combination is used to indicate the configuration information respectively corresponding to the one or more second time segments respectively,
the first configuration information combination is a partial configuration information combination among one or more second configuration information combinations, and identifiers of the one or more second configuration information combinations are known to the base station and a terminal.

44. The base station of any one of claims 36 to 42, wherein an encoding way of the first information and the second information in the first signaling comprises: a start and length indicator value, SLIV, encoding way, or a first encoding way,
wherein the first encoding way is a preset or protocol predefined encoding way.

45. The base station of any one of claims 32 to 44, wherein the operations further comprise:

determining effective time of the first configuration; and
transmitting fourth information to a terminal, wherein the fourth information is used to indicate the effective time of the first configuration,
wherein the fourth information is comprised in the first signaling, or the fourth information is carried in other signaling, or the fourth information is separate signaling.

46. The base station of claim 45, wherein determining the effective time of the first configuration comprises:
obtaining capability information of a network controlled repeater, NCR, and determining the effective time based on the capability information, wherein the capability information is used to indicate minimum effective time supported by the NCR.

47. The base station of any one of claims 32 to 46, wherein the time segment information comprises at least two of the following:

   a start location, an end location, or a length,
   wherein the encoding way of at least two of the start location, the end location, or the length in the first signaling comprises: a start and length indicator value, SLIV, encoding way, or a second encoding way,
   wherein the second encoding way is a preset or protocol predefined encoding way.

48. The base station of any one of claims 32 to 47, wherein the first configuration is used to indicate time segment information of one or more second time segments within the first time segment, and the configuration information respectively corresponding to each second time segment among the one or more second time segments, comprises:

   the first configuration is used to, in case that an overlapping time unit exists between a third time segment and the one or more second time segments, indicate time units comprised in the one or more second time segments to skip the overlapping time unit, or, indicate configuration information corresponding to the overlapping time unit based on a priority of configuration information corresponding to the third time segment and a priority of configuration information corresponding to the one or more second time segments,
   wherein the configuration information of the third time segment is configured by a semi-static configuration way.

49. A terminal, comprising a memory, a transceiver and a processor,
   wherein the memory is used for storing a computer program, the transceiver is used for receiving and transmitting data under control of the processor, and the processor is used for reading the computer program in the memory and performing the following operations:

   receiving first signaling;
   obtaining a first configuration corresponding to a first time segment based on the first signaling; and
   determining, based on the first configuration, time segment information of one or more second time segments comprised in the first time segment, and configuration information respectively corresponding to each second time segment among the one or more second time segments.

50. The terminal of claim 49, wherein the configuration information comprises beam information.

51. The terminal of claim 49 or 50, wherein the first signaling comprises a first index corresponding to the first time segment, and the first index is used to indicate a first configuration corresponding to the first index in a time domain resource allocation, TDRA, table,
   wherein the first index is one of one or more indexes comprised in the TDRA table, each index in the TDRA table corresponds to a type of configuration, and different indexes correspond to different configurations.

52. The terminal of claim 51, wherein in case that the first signaling is used to indicate first configurations respectively corresponding to multiple first time segments, first indexes respectively corresponding to each first time segment among the multiple first time segments are partially the same, completely the same, or completely different.

53. The terminal of claim 49 or 50, wherein the first signaling comprises first information and/or second information, wherein

   the first information is used to indicate one or more second time segment information; and
   the second information is used to indicate configuration information respectively corresponding to the one or more second time segments.

54. The terminal of claim 53, wherein the first signaling comprises one or more pieces of first information, and the first information and the second time segments are in a one-to-one correspondence.

55. The terminal of claim 53, wherein the first signaling comprises one or more pieces of second information, and the second information and the second time segments are in a one-to-one correspondence.

56. The terminal of claim 55, wherein a length of the first signaling is: M*segment_time_bits + M*beam_bits, wherein

$$\text{segment\_time\_bits} = \lceil \log_2 \left( W * (W+1)/2 \right) \rceil$$, M is a quantity of the one or more second time segments, W is a length of the first time segment, and beam_bits is a length of configuration information corresponding to one second time segment.

**57.** The terminal of claim 53, wherein the first information comprises:
third information, wherein the third information comprises at least one of the following:

first location information of an intermediate time unit in the first time segment, wherein the first location information is used to divide the first time segment into one or more second time segments, the intermediate time unit and an adjacent previous time unit belong to a same second time segment, or the intermediate time unit and an adjacent next time unit belong to a same second time segment, and a quantity of the intermediate time units is one or more; or
second location information of an intermediate time segment in the first time segment, wherein the second location information is used to divide the first time segment into one or more second time segments, the intermediate time segment determined by the second location information is used as the second time segment, and a quantity of the intermediate time segments is one or more.

**58.** The terminal of claim 57, wherein the second location information comprises at least one of the following:

a start location of the intermediate time segment;
an end location of the intermediate time segment; or
a length of the intermediate time segment.

**59.** The terminal of claim 57 or 58, wherein a length of the first signaling is: segment_time_bits + M*beam_bits, wherein segment_time_bits = $F$ (W, M), F() is an operation function, the operation function is associated with a length W of the first time segment and a quantity M of the one or more second time segments, the second time segment is located in the first time segment, and beam_bits is a length of configuration information corresponding to one second time segment.

**60.** The terminal of any one of claims 49 to 59, wherein determining, based on the first configuration, time segment information of one or more second time segments comprised in the first time segment, and configuration information respectively corresponding to each second time segment among the one or more second time segments comprises:

in case that an overlapping time unit exists between a third time segment and the one or more second time segments, determining that time units comprised in the one or more second time segments skip the overlapping time unit, or, determining configuration information corresponding to the overlapping time unit based on a priority of configuration information corresponding to the third time segment and a priority of configuration information corresponding to the one or more second time segments,
wherein the configuration information of the third time segment is configured by a semi-static configuration manner.

**61.** The terminal of claim 60, wherein determining configuration information corresponding to the overlapping time unit based on the priority of configuration information corresponding to the third time segment and the priority of configuration information corresponding to the one or more second time segments comprises:

in case that the priority of the configuration information corresponding to the third time segment is higher than the priority of the configuration information corresponding to the one or more second time segments, determining the configuration information corresponding to the overlapping time unit based on the configuration information corresponding to the third time segment; or
in case that the priority of the configuration information corresponding to the third time segment is lower than the priority of the configuration information corresponding to the one or more second time segments, determining the configuration information corresponding to the overlapping time unit based on the configuration information corresponding to the one or more second time segments.

**62.** The terminal of claim 49, wherein the operations further comprise:

receiving fourth information, wherein the fourth information is used to indicate effective time of the first configuration,
wherein the fourth information is comprised in the first signaling, or the fourth information is carried in other signaling, or the fourth information is separate signaling.

63. An apparatus for configuration information indication, comprising:

a generating module, used for generating first signaling, wherein the first signaling is used to indicate a first configuration corresponding to a first time segment, the first configuration is used to indicate time segment information of one or more second time segments within the first time segment, and configuration information respectively corresponding to each second time segment among the one or more second time segments; and

a transmitting module, used for transmitting the first signaling.

64. An apparatus for configuration information indication, comprising:

a receiving module, used for receiving first signaling;

an obtaining module, used for obtaining a first configuration corresponding to a first time segment based on the first signaling; and

a determining module, used for determining, based on the first configuration, time segment information of one or more second time segments comprised in the first time segment, and configuration information respectively corresponding to each second time segment among the one or more second time segments.

65. A processor-readable storage medium, wherein the processor-readable storage medium stores a computer program, the computer program is used to cause a processor to perform the method of any one of claims 1 to 33.

EP 4 561 146 A1

Network controlled repeater (NCR)

FIG. 1

FIG. 2

Beam & scheduling information

FIG. 3

DCI-1 DCI-2 DCI-3
UE-1 UE-2 UE-3

PDSCH-1  PDSCH-2  PDSCH-3

NCR parses
DCI-1/2/3

Control beam
direction of
repeater
forwarding
device

NCR forwarder

Beam ID =3     Beam ID =1     Beam ID =2

Within duration W, three beam time segments

FIG. 4

Generating first signaling, where the first signaling is used to indicate a first
configuration corresponding to a first time segment, the first configuration is used to
indicate time segment information of one or more second time segments within the first
time segment, and configuration information respectively corresponding to each second
time segment among the one or more second time segments

500

Transmitting the first signaling

510

FIG. 5

Second time
segment-1

Second time
segment-2

Second time
segment-3

#0  #1  #2        #6  #7              #13

Beam ID =0        Beam ID =2          Beam ID =3

FIG. 6

Slot-1　　　　　　Slot-2　　　　　　Slot-3

Symbol is not indicated

Beam ID =0　　Beam ID =2　　Beam ID =3

Beam ID =1　　Beam ID =2

FIG. 7

First second time segment

| #0 | | | | | | | | #8 | | | | | #13 |

Location of indicated point P ⇧

Second second target time segment

Duration W=14

Time segment information=8, and indicate location of point P

FIG. 8

First second time segment　　Second second time segment　　Third second time segment

| #0 | | | | | #5 | | | #8 | | | | | #13 |

⇩ Point S　　　⇩ Point E

Duration W=14 symbol

Time segment information: start point S=5, length=4. That is, end point E=8.

FIG. 9

Two second time segment information indications may be merged
into one second time segment information indication.

FIG. 10

FIG. 11

Receiving first signaling — 1200

Obtaining a first configuration corresponding to a first time segment based
on the first signaling — 1210

Determining, based on the first configuration, time segment information of
one or more second time segments included in the first time segment, and
configuration information respectively corresponding to each second time
segment among the one or more second time segments — 1220

FIG. 12

55

Beam information of DCI
(symbol#0-#9, beam ID=0)

Semi-statically configured
beam information

Skip beam
configuration

| 0 | 1 | 2 | | | 6 | 7 | | | | 13 | 14 | | | 18 | | 20 |

Beam ID =0

Beam ID =3

Beam ID =0

FIG. 13

Two pieces of symbol
beam information
configured to be "H"
(hard) cannot be
overridden

Semi-statically configured
beam information

Beam information of DCI
(symbol#0-#9, beam ID=0)

| 0 | 1 | 2 | | | 6 | H | H | S | S | S | 13 | 14 | | | 18 | | 20 |

#7    #9    #12

Beam ID =0

Beam ID =3

Beam ID =0

FIG. 14

```
┌──────────────┐  1510        ┌──────────────┐
│  Processor   │◄═══►│        │
└──────────────┘     │        │◄═══► ┌──────────────┐ 1500
          1520       │  Bus   │      │ Transceiver  │
┌──────────────┐     │interface│     └──────────────┘
│   Memory     │◄═══►│        │
└──────────────┘     └──────────────┘
```

FIG. 15

1610

Processor

1620

Memory

Bus interface

1600

Transceiver

FIG. 16

1700

Apparatus for configuration information indication

1710

Generating module

1720

Transmitting module

FIG. 17

1800

Apparatus for configuration information indication

1811

Receiving module

1820

Obtaining module

1830

Determining module

FIG. 18

## INTERNATIONAL SEARCH REPORT

| International application No. |
|---|
| **PCT/CN2023/106521** |

### A. CLASSIFICATION OF SUBJECT MATTER

H04W24/02(2009.01)i

According to International Patent Classification (IPC) or to both national classification and IPC

### B. FIELDS SEARCHED

Minimum documentation searched (classification system followed by classification symbols)

IPC: H04W,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, CNKI, 3GPP: 基站, 网络, 装置, 智能, 中继, 配置, 多, 时间段, 时段, 时域, 时隙, 波束, 索引, 位置, 长度, 起始, 结束, 指示值, 能力, 生效, base, station, BS, eNB, apparatus, network, repeater, NCR, smart, SR, configuration, multiple, time, period, segment, domain, slot, index, position, length, beginning, start, indicator, value, SLIV, capacity, ability, effect

### C. DOCUMENTS CONSIDERED TO BE RELEVANT

| Category* | Citation of document, with indication, where appropriate, of the relevant passages | Relevant to claim No. |
|---|---|---|
| X | CN 112005600 A (QUALCOMM INC.) 27 November 2020 (2020-11-27) description, paragraphs 54-216, and figures 1-12 | 1-3, 5-7, 13-16, 18-20, 22-24, 31-34, 36-38, 44-47, 49-51, 53-55, 62-65 |
| A | US 2020366363 A1 (QUALCOMM INC.) 19 November 2020 (2020-11-19) entire document | 1-65 |
| A | US 2021297144 A1 (QUALCOMM INC.) 23 September 2021 (2021-09-23) entire document | 1-65 |
| A | US 2022022113 A1 (HUAWEI TECHNOLOGIES CO., LTD.) 20 January 2022 (2022-01-20) entire document | 1-65 |
| A | WO 2022018688 A1 (LENOVO SINGAPORE PTE LTD.) 27 January 2022 (2022-01-27) entire document | 1-65 |
| A | WO 2022035528 A1 (QUALCOMM INC.) 17 February 2022 (2022-02-17) entire document | 1-65 |

☐ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **12 October 2023** | **13 October 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/106521**

| Patent document cited in search report | | | Publication date (day/month/year) | Patent family member(s) | | | Publication date (day/month/year) |
|---|---|---|---|---|---|---|---|
| CN | 112005600 | A | 27 November 2020 | KR | 20210003137 | A | 11 January 2021 |
| | | | | BR | 112020021982 | A2 | 26 January 2021 |
| | | | | JP | 2021522732 | A | 30 August 2021 |
| | | | | JP | 7274503 | B2 | 16 May 2023 |
| | | | | TW | 201946410 | A | 01 December 2019 |
| | | | | TWI | 798427 | B | 11 April 2023 |
| | | | | WO | 2019209979 | A1 | 31 October 2019 |
| | | | | US | 2019335491 | A1 | 31 October 2019 |
| | | | | US | 11202308 | B2 | 14 December 2021 |
| | | | | EP | 3785478 | A1 | 03 March 2021 |
| | | | | AU | 2019261606 | A1 | 22 October 2020 |
| US | 2020366363 | A1 | 19 November 2020 | US | 11528075 | B2 | 13 December 2022 |
| | | | | TW | 202102023 | A | 01 January 2021 |
| | | | | WO | 2020232098 | A1 | 19 November 2020 |
| US | 2021297144 | A1 | 23 September 2021 | US | 11515930 | B2 | 29 November 2022 |
| US | 2022022113 | A1 | 20 January 2022 | AU | 2020243911 | A1 | 21 October 2021 |
| | | | | AU | 2020243911 | B2 | 01 June 2023 |
| | | | | WO | 2020187064 | A1 | 24 September 2020 |
| | | | | EP | 3930242 | A1 | 29 December 2021 |
| | | | | EP | 3930242 | A4 | 27 April 2022 |
| WO | 2022018688 | A1 | 27 January 2022 | EP | 4186174 | A1 | 31 May 2023 |
| WO | 2022035528 | A1 | 17 February 2022 | EP | 4197121 | A1 | 21 June 2023 |
| | | | | US | 2022053486 | A1 | 17 February 2022 |
| | | | | US | 11711789 | B2 | 25 July 2023 |

Form PCT/ISA/210 (patent family annex) (July 2022)

**REFERENCES CITED IN THE DESCRIPTION**

**Patent documents cited in the description**

- CN 202210861763 X